# EUROPEAN PATENT SPECIFICATION

(11) **EP 4 286 024 B1**
(45) Date of publication and mention of the grant of the patent: **13.08.2025**
(21) Application number: 22854993.7
(22) Date of filing: 12.05.2022
(51) Int. Cl.: G09B 19/00, A63B 24/00, A63B 5/20

(54) **METHOD FOR DETECTING ROPE SKIPPING STATE, AND ELECTRONIC DEVICE**
VERFAHREN ZUR ERKENNUNG EINES SEILÜBERSPRINGUNGSZUSTANDS UND ELEKTRONISCHE VORRICHTUNG
PROCÉDÉ DE DÉTECTION D'ÉTAT DE SAUT À LA CORDE ET DISPOSITIF ÉLECTRONIQUE

(30) Priority: 12.08.2021 CN 202110926916
(43) Date of publication of application: 06.12.2023
(73) Proprietor: Honor Device Co., Ltd., Shenzhen, Guangdong 518040 (CN)
(72) Inventor: ZHANG, Xiaowu, Shenzhen, Guangdong 518040 (CN); LI, Danhong, Shenzhen, Guangdong 518040 (CN); DI, Haoxuan, Shenzhen, Guangdong 518040 (CN); AN, Ran, Shenzhen, Guangdong 518040 (CN)
(74) Representative: Epping - Hermann - Fischer
(86) International application number: PCT/CN2022/092431
(87) International publication number: WO 2023/016004

(56) References cited:
- CN-A- 109 529 306
- CN-A- 109 737 952
- CN-A- 109 737 952
- CN-A- 109 830 277
- CN-A- 109 830 277
- CN-A- 111 701 216
- CN-A- 113 035 315
- CN-B- 111 558 195
- US-A1- 2007 129 220

## Description

### TECHNICAL FIELD

This application relates to the field of terminal technologies, and in particular, to a rope jumping status detection method and an electronic device.

### BACKGROUND

As a convenient exercise manner, rope jumping is favored by many users, and increasingly more users participate in the rope jumping exercise. In addition, recoding a process of the rope jumping exercise and performing quantitative evaluation on the exercise process help users understand exercise situations of the users.

In the rope jumping exercise, a rope jumping quantity, rope jumping time, and a quantity of rope jumping interruptions are usually used as comprehensive evaluation indicators to perform quantitative evaluation on the exercise process. However, the rope jumping quantity is usually recorded through manual counting, counting using a rope jumping device, or the like. It can be learned that, the foregoing recording manner is prone to cause a problem of recording omission or erroneous recording. In addition, only the rope jumping quantity can be recorded, and information dimensions are undiversified, which cannot well meet a requirement of a user.

CN 109 737 952 A describes a rope skipping data processing method, wherein rope skipping data are collected; characteristic information of the skipping rope data is extracted and recorded, corresponds to rope skipping cycles, and is obtained based on wave crest information and wave trough information of the rope skipping data; whether a continuous rope skipping action occurs or not is judged based on characteristic information of the two adjacent cycles and preset benchmark standard information.

### SUMMARY

Embodiments of this application provide a rope jumping status detection method and an electronic device. The electronic device may determine an iterative window width based on target exercise data in a target time period, and determine a rope jumping status in the target time period based on the target exercise data by using the iterative window width, to record rope jumping of a user, for example, recording a quantity of rope jumping interruptions, so that recording accuracy can be improved.

A first aspect of the embodiments of this application provides a rope jumping status detection method. The method may be applied to an electronic device, and the electronic device may include one or more motion sensors, such as an acceleration sensor and a gyroscope sensor. The method may include: in a first target time period, the first target time period includes a first end moment, and the first end moment is used to identify an end moment of the first target time period; determining a rope jumping status in the first target time period based on first target exercise data by using an iterative window width, where the iterative window width is used to identify that the window width is obtained through iteration; determining a first quantity of rope jumping interruptions based on the rope jumping status in the first target time period, where the first quantity of rope jumping interruptions is used to identify a quantity of rope jumping interruptions in the first target time period; and displaying the first quantity of rope jumping interruptions at the first end moment. According to the method, the iterative window width may be used to determine the rope jumping status in the first target time period, and the iterative window width is obtained through iterative calculation and is not a fixed window width. Therefore, accuracy of recording a rope jumping exercise can be improved. In addition, a quantity of rope jumping interruptions of a user may be further output based on the rope jumping status, to record rope jumping of the user from a plurality of detection dimensions.

With reference to the first aspect, the determining a rope jumping status in the first target time period based on first target exercise data by using an iterative window width includes: determining an iterative window width in the first target time period based on the first target exercise data; determining, by using the iterative window width, peaks included in the first target exercise data, wherein peak searching is performed to search for local maximums of the first target exercise data in the iterative window width; and determining the rope jumping status in the first target time period based on the peaks included in the first target exercise data. Using the iterative window width to determine the peak included in the first target data better conforms to an actual rope jumping situation of a user compared with using a fixed window width to determine a peak in the conventional technology, and improves recording precision.

With reference to the first aspect, the determining an iterative window width in the first target time period based on the first target exercise data includes: performing peak searching on the first target exercise data based on a preset window width or a window width obtained in previous iterative calculation, to obtain a preset peak quantity; obtaining a reference window width of the first target exercise data based on the preset peak quantity; performing peak searching on the first target exercise data again based on the reference window width, to obtain a reference peak quantity; and determining the iterative window width in the first target time period based on the preset peak quantity and the reference peak quantity.

It can be learned that, an iterative window width in a target actual period is obtained through calculation based on target exercise data. Compared with a fixed window width in the conventional technology, this manner may better conform to a motion law of actual exercise data, so that the exercise data can be processed more effectively, and data accuracy can be ensured.

With reference to the first aspect, in a possible implementation of the first aspect, the determining the iterative window width in the first target time period based on the preset peak quantity and the reference peak quantity includes: obtaining a preset rope jumping frequency in the first target time period based on the preset peak quantity; obtaining a reference rope jumping frequency in the first target time period based on the reference peak quantity; and calculating an absolute value of a difference between the preset rope jumping frequency and the reference rope jumping frequency, where if the absolute value of the difference is greater than or equal to a reference threshold, the iterative window width is an average value of the preset window width and the reference window width.

It can be learned that, the iterative window width is determined based on actually collected target exercise data in a target time period. Therefore, the iterative window width may better conform to a motion law of exercise data, so that the exercise data can be processed better.

With reference to the first aspect, in a possible implementation of the first aspect, the determining the rope jumping status in the first target time period based on the peaks included in the first target exercise data includes: extracting a frequency domain feature in the first target time period based on the first target exercise data; extracting a time domain feature in the first target time period based on the peaks included in the first target exercise data; and determining the rope jumping status in the first target time period based on the time domain feature and the frequency domain feature.

It can be learned that, a time domain feature and a frequency domain feature of target exercise data are features that can reflect a rope jumping situation of a user. Therefore, a rope jumping status of the user may be determined by using the time domain feature and the frequency domain feature. With reference to the first aspect, in a possible implementation of the first aspect, the time domain feature includes a peak interval, and the extracting a time domain feature in the first target time period based on the peaks included in the first target exercise data includes: calculating a first peak interval between any two adjacent peaks in the peaks included in the first target exercise data; determining an effective peak in the first target exercise data based on the first peak interval; and using a second peak interval between any two adjacent effective peaks as the time domain feature in the first target time period.

With reference to the first aspect, in a possible implementation of the first aspect, the determining an effective peak in the first target exercise data based on the first peak interval includes: if the first peak interval is greater than or equal to a first preset threshold, determining that the former in the any two adjacent peaks is the effective peak.

It is easy to understand that in target exercise data, an effective peak exists, and an ineffective peak also exists. The peak interval, that is, the time domain feature, is an interval between any two effective peaks, which removes impact of the ineffective peak on the peak interval. In this way, interference of the ineffective peak can be reduced when an exercise status of exercise data is being determined.

With reference to the first aspect, in a possible implementation of the first aspect, the time domain feature includes a peak-to-valley value, and the extracting a time domain feature in the target time period based on the peaks included in the first target exercise data includes: calculating peak-to-valley values of the peaks included in the first target exercise data, where a peak-to-valley value of each peak is a height difference between the peak and a nearest valley after the peak; calculating a ratio between peak-to-valley values of any two adjacent peaks; determining an effective peak in the first target exercise data based on the ratio between the peak-to-valley values of the any two adjacent peaks; and using a peak-to-valley value of the effective peak as the time domain feature in the first target time period.

With reference to the first aspect, in a possible implementation of the first aspect, the determining an effective peak in the first target exercise data based on the ratio between the peak-to-valley values of the any two adjacent peaks includes: if the ratio between the peak-to-valley values of the any two adjacent peaks is greater than or equal to a second preset threshold, determining that the former in the any two adjacent peaks is the effective peak.

It can be learned that, it is easy to understand that in target exercise data, an effective peak exists, and an ineffective peak also exists. The peak-to-valley value, that is, the time domain feature, is a peak-to-valley value of the effective peak, which removes impact of the ineffective peak on the peak-to-valley value. In this way, interference of the ineffective peak can be reduced when an exercise status of exercise data is being determined.

With reference to the first aspect, in a possible implementation of the first aspect, the frequency domain feature includes a dominant frequency energy proportion, and the extracting a frequency domain feature in the first target time period based on the first target exercise data includes: extracting power spectral density of the first target exercise data through a Fourier transform; and determining the dominant frequency energy proportion in the first target time period from the power spectral density. The frequency domain feature can reflect components of a signal in different frequency domains, and the dominant frequency energy proportion can reflect a motion frequency of a user.

With reference to the first aspect, in a possible implementation of the first aspect, the time domain feature includes the peak interval and the peak-to-valley value, the frequency domain feature includes the dominant frequency energy proportion, and the determining the rope jumping status in the first target time period based on the time domain feature and the frequency domain feature includes: inputting the peak interval, the peak-to-valley value, and the dominant frequency energy proportion to a decision model; and determining the rope jumping status in the first target time period by using the decision model.

It can be learned that, a time domain feature and a frequency domain feature of target exercise data are extracted, and the time domain feature is a time domain feature of an effective peak, so that interference of an ineffective peak can be removed. In this way, after the time domain feature and the frequency domain feature are input to the decision model, accuracy of rope jumping recording can be improved.

With reference to the first aspect, in a possible implementation of the first aspect, after the determining the rope jumping status in the first target time period by using the decision model, the method further includes: when the rope jumping status in the first target time period is different from a rope jumping status in a previous target time period of the first target time period, inputting the rope jumping status in the first target time period and a rope jumping status in each target time period in a next preset time period of the first target time period to a state transition model; and obtaining the rope jumping status in the first target time period by using the state transition model. The state transition model can avoid a sudden state change and improve system robustness.

With reference to the first aspect, in a possible implementation of the first aspect, when the rope jumping status in each target time period in the next preset time period in the state transition model is the same as the rope jumping status in the first target time period, the rope jumping status in the first target time period is obtained; and when a rope jumping status in any time period in the next preset time period in the state transition model is different from the rope jumping status in the first target time period, the rope jumping status in the previous target time period of the first target time period is used as the rope jumping status in the first target time period. The state transition model can avoid a sudden state change and improve system robustness.

With reference to the first aspect, in a possible implementation of the first aspect, the rope jumping status includes one or more of the following: a rope jumping interruption state, a uniform-speed jumping state, an accelerated jumping state, a decelerated jumping state, and a variable-speed jumping state.

It can be learned that, the electronic device may output a plurality of rope jumping states of a user, to help the user learn of a rope jumping situation of the user from a plurality of angles.

According to a second aspect, this application provides an electronic device, including one or more processors, one or more memories, one or more motion sensors, a sound collector, and a display. The one or more memories, the one or more motion sensors, the sound collector, and the display are coupled to the one or more processors. The one or more memories are configured to store computer program code, the computer program code includes computer instructions. The one or more processors invoke the computer instructions, so that the wearable device performs the rope jumping status detection method provided in any implementation of the first aspect.

According to the method, the electronic device may update an iterative window width based on exercise data in a preset period, and determine, based on the iterative window width, peaks included in the exercise data to record rope jumping of a user, for example, recording a rope jumping status and a rope jumping quantity, so that recording accuracy can be improved.

### BRIEF DESCRIPTION OF DRAWINGS

The following describes the accompanying drawings used in embodiments of this application.
FIG. 1 is a schematic diagram of a structure of a wearable device according to an embodiment of this application;
FIG. 2 is a schematic diagram of a rope jumping process of a user according to an embodiment of this application;
FIG. 3A-FIG. 3D are diagrams of UIs of a wearable device according to an embodiment of this application;
FIG. 4A-FIG. 4G are diagrams of UIs for setting a rope jumping target by a wearable device according to an embodiment of this application;
FIG. 5A-FIG. 5B are diagrams of UIs for sending, by a terminal device, an instruction for enabling a rope jumping mode to a wearable device according to an embodiment of this application;
FIG. 6 is a schematic diagram of an application interface of a terminal device according to an embodiment of this application;
FIG. 7-FIG. 10 are diagrams of UIs for enabling a rope jumping mode by a wearable device according to an embodiment of this application;
FIG. 11 is a schematic diagram of a dominant frequency energy proportion according to an embodiment of this application;
FIG. 12A and FIG. 12B are diagrams of a group of UIs for displaying exercise data by a wearable device according to an embodiment of this application;
FIG. 13A to FIG. 13I are diagrams of another group of UIs for displaying a rope jumping result by a wearable device according to an embodiment of this application;
FIG. 14-FIG. 20 are diagrams of a group of UIs for displaying exercise data by a terminal device according to an embodiment of this application;
FIG. 21 is a schematic flowchart of a rope jumping status detection method according to an embodiment of this application;
FIG. 22 is a schematic flowchart of another rope jumping exercise detection method according to an embodiment of this application;
FIG. 23 is a schematic diagram of a structure of an electronic device according to an embodiment of this application; and
FIG. 24 is a schematic diagram of a structure of a wearable device according to an embodiment of this application.

### DESCRIPTION OF EMBODIMENTS

The following clearly and completely describes technical solutions in embodiments of this application with reference to the accompanying drawings. In the descriptions of embodiments of this application, "/" means "or" unless otherwise specified, for example, "A/B" may indicate A or B. In this specification, "or" merely describes an association relationship between associated objects, and indicates that three relationships may exist. For example, "A or B" may indicate the following cases: Only A exists, both A and B exist, and only B exists. In addition, in the descriptions of embodiments of this application, "a plurality of" means two or more.

The following terms "first" and "second" are merely intended for descriptive purposes, and shall not be understood as an implication or implication of relative importance or an implicit indication of a quantity of indicated technical features. Therefore, features defined with "first" and "second" may explicitly or implicitly include one or more features. In the descriptions of embodiments of this application, unless otherwise specified, "a plurality of" means two or more.

A term "user interface (user interface, UI)" in the specification, claims, and accompanying drawings of this application is a medium interface for interaction and information exchange between a user and an application or an operating system, and the medium interface implements conversion between an internal form of information and a form acceptable to the user. A user interface of an application is source code written in a specific computer language such as java or an extensible markup language (extensible markup language, XML). The source code of the interface is parsed and rendered on a terminal device, and is finally presented as user-identifiable content, for example, a control such as a picture, text, or a button. The control (control) is also referred to as a widget (widget), and is a basic element of the user interface. Typical controls include a toolbar (toolbar), a menu bar (menu bar), a text box (text box), a button (button), a scrollbar (scrollbar), a picture, and text. An attribute and content of the control in the interface are defined by using a label or a node. For example, the control included in the interface is defined in the XML by using a node such as <Textview>, <ImgView>, or <VideoView>. One node corresponds to one control or attribute in the interface. After being parsed and rendered, the node is presented as user-visible content. In addition, interfaces of many applications, such as a hybrid application (hybrid application), usually further include a web page. The web page, also referred to as a page, may be understood as a special control embedded in an interface of an application. The web page is source code written in a specific computer language, for example, a hyper text markup language (hyper text markup language, HTML), a cascading style sheet (cascading style sheets, CSS), or a javascript (JavaScript, JS). The source code of the web page may be loaded and displayed as user-identifiable content by a browser or a web page display component with a function similar to that of the browser. Specific content included in the web page is also defined by using a label or a node in the source code of the web page. For example, an element and an attribute of the web page are defined in the HTML by using <p>, <img>, <video>, and <canvas>. The user interface is usually in a representation form of a graphical user interface (graphic user interface, GUI), and the graphical user interface is a user interface that is related to a computer operation and that is displayed in a graphical manner. The graphical user interface may be an interface element such as an icon, a window, or a control that is displayed on a display of an electronic device. The control may include visible interface elements such as an icon, a button, a menu, a tab, a text box, a dialog box, a status bar, a navigation bar, and a Widget.

This application provides a rope jumping exercise detection method. An electronic device may perform rope jumping counting on a rope jumping exercise of a user by using data detected by one or more motion sensors (for example, an acceleration sensor and a gyroscope sensor), and monitor and record a rope jumping status (for example, a rope jumping interruption state, a variable-speed jumping state, or a uniform-speed jumping state) of the user in a rope jumping process. In this way, statistics about multi-dimensional information (for example, a rope jumping quantity, a quantity of rope jumping interruptions, and a rope jumping status) of the user in the rope jumping process may be collected, to help the user better understand a rope jumping situation of the user. The rope jumping exercise may be single-person rope jumping or multi-person rope jumping. It should be noted that, in the embodiments of this application, single-person rope jumping is specifically used as an example for description, but this should not constitute a limitation. To improve precision of rope jumping counting for a user, the electronic device collects first target exercise data in a first target time period by using one or more motion sensors, where the first target time period includes a first end moment, and the first end moment is used to identify an end moment of the first target time period. Then, a wearable device 100 may determine a rope jumping status in the first target time period based on the first target exercise data by using an iterative window width, where the iterative window width is used to identify that the window width is obtained through iteration. Further, the electronic device may determine a first quantity of rope jumping interruptions based on the rope jumping status in the first target time period, where the first quantity of rope jumping interruptions is used to identify a quantity of rope jumping interruptions in the first target time period; and display the first quantity of rope jumping interruptions at the first end moment. A target rope jumping status may include one or more of the following: a rope jumping interruption state, a uniform-speed jumping state, an accelerated jumping state, a decelerated jumping state, and the like. In this way, in each preset period, the electronic device may update the iterative window width used to determine the rope jumping status, and determine a rope jumping status in a target time period based on target exercise data by using an updated iterative window width. The wearable device may output the target rope jumping status of the user based on a peak, and record a rope jumping situation of the user from another dimension, to help the user fully understand the rope jumping situation of the user.

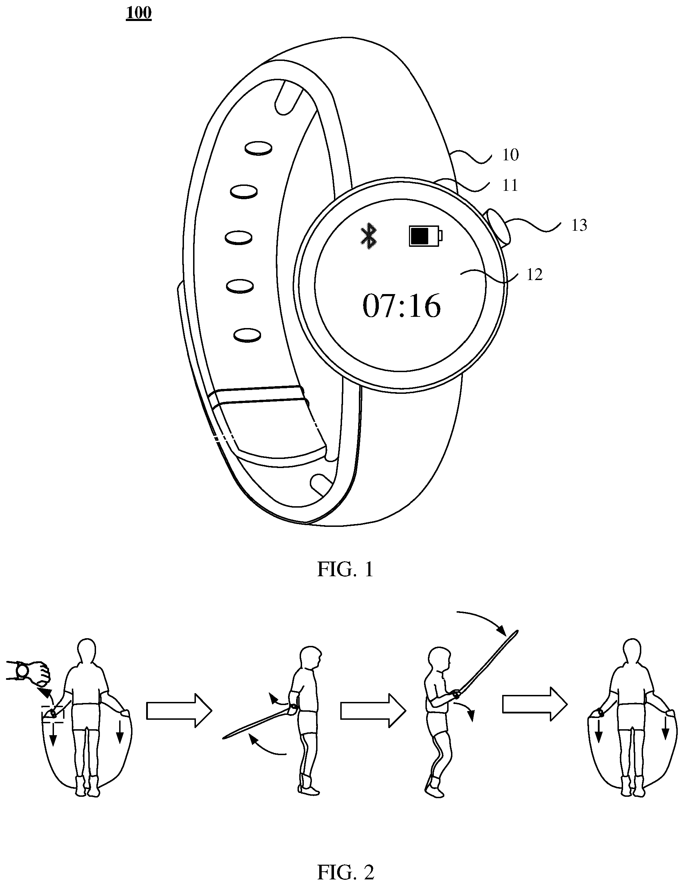

The following describes the electronic device in the embodiments of this application by using a wearable device. FIG. 1 is a schematic diagram of a structure of a wearable device 100. The wearable device 100 may include a device body 11 and a wearable part 10.

An acceleration sensor, a gyroscope sensor, and a sound collector are configured in the device body 11. The device body 11 may respectively collect acceleration data, gyroscope data, and a sound signal by using the acceleration sensor, the gyroscope sensor, and the sound collector. The acceleration sensor is a three-axis acceleration sensor, and the gyroscope sensor is a three-axis gyroscope sensor. The device body 11 may include a display 12 and a touch control 13. The display 12 may be configured to display content such as time, power of the device body 11, a Bluetooth identifier, a received message, and exercise data of a user. The touch control 13 may be configured to receive a tap operation or a slide operation of a user to control the display 12 and the like.

The device body 11 may further record a rope jumping quantity, a quantity of rope jumping interruptions, exercise time, a rope jumping frequency, and burnt calories of a user, and have basic functions such as an incoming call reminder and a message notification.

The device body 11 may establish a wireless communication connection to a terminal device 200 (for example, a mobile phone or a tablet computer).

In a possible implementation, the device body 11 may establish a wireless communication connection to the terminal device 200 by using Bluetooth. The device body 11 may send exercise data of a user to the terminal device 200 to which a connection is established. In addition, when the terminal device 200 receives an incoming call or a message notification, the device body 11 may receive an instruction of the terminal device 200, to remind a user of the incoming call or the message notification.

The wearable part 10 is configured to install the device body 11. For example, the wearable part 10 may be an apparatus such as a wristband or a watch band. The wearable part 10 is an apparatus that enables the device body 11 to be attached to a wrist of a user. The wearable device 100 is attached to the wrist of the user, so that the acceleration sensor and the gyroscope sensor collect acceleration data and gyroscope data of the wrist of the user, to monitor motion of the wrist of the user.

For ease of understanding, the following describes, by using a single-person rope jumping application scenario, the rope jumping exercise detection method provided in the embodiments of this application.

First, terms in the rope jumping application scenario are explained.

**Rope jumping mode:** The rope jumping mode is a function of the wearable device 100, and may be used to record exercise data of a user in a rope jumping process, and monitor a rope jumping status of the user (for example, a rope jumping interruption state, a uniform-speed jumping state, or a variable-speed jumping state). When the rope jumping mode is enabled, both the acceleration sensor and the gyroscope sensor in the wearable device 100 are in a working state, and may be respectively configured to collect acceleration data and gyroscope data of a wrist of the user in the rope jumping process.

The wearable device 100 may process the acceleration data and the gyroscope data to obtain exercise data such as a dominant frequency energy proportion, a peak interval, and a peak-to-valley value, so as to determine whether a current rope jumping status of the user is a rope jumping interruption state, a variable-speed jumping state, or a uniform-speed jumping state.

**Rope jumping process:** A rope jumping action may be considered as a coordinated and combined motion that includes a jump action of a lower limb and an arm swinging action of an upper limb.

FIG. 2 is a schematic diagram of a rope jumping process of a user. The user holds handles at two ends of a jump rope. When an arm is naturally vertical, the jump rope also hangs down naturally. A wrist drives the arm to perform an arm swinging action, so that the jump rope is periodically wound from a foot of the user to a head of the user, and then wound to the foot of the user. Therefore, a waveform presented in a rope jumping period by exercise data corresponding to a complete rope jumping action is similar to a sine wave.

For the wearable device 100 worn on the wrist, acceleration data of the wearable device 100 is jointly affected by the jump action and the arm swinging action, and gyroscope data is mainly affected by the arm swinging action. The gyroscope sensor may simultaneously measure gyroscope data in three directions: an X axis, a Y axis, and a Z axis; and the acceleration sensor may simultaneously measure acceleration data in three directions: an X axis, a Y axis, and a Z axis. It should be noted that directions of the X axis, the Y axis, and the Z axis may be set based on an actual situation. For example, a direction directly above the wearable device may be set as a Z-axis direction, an X-axis direction and a Y-axis direction are located on a plane on which the wearable device is located, and the screen is perpendicular to the Z-axis direction.

**Peak and valley:** The peak is a maximum value of a wave amplitude of a wave in a wavelength range, and a minimum value corresponding to the peak is referred to as the valley. A transverse wave is used as an example. A highest protruded point may be the peak, and a lowest depressed point may be the valley. It can be understood that, in a complete rope jumping action, the peak and the valley may respectively correspond to a highest point and a lowest point that the arm swinging motion reaches. Therefore, in the embodiments of this application, the peak and the valley may respectively correspond to a maximum value and a minimum value of axial angular velocity component data that is obtained by the gyroscope sensor and that is in a direction perpendicular to the ground. Alternatively, the peak and the valley may respectively correspond to a maximum value and a minimum value of acceleration component data that is obtained by the acceleration sensor and that is in the direction perpendicular to the ground.

**Peak interval:** The peak interval is a time interval between two adjacent peaks.

**Peak-to-valley value:** The peak-to-valley value is a height difference between a peak value and a valley value in a rope jumping period.

**Rope jumping interruption:** In a rope jumping process, a rope jumping action is interrupted due to another reason (for example, a foot is tripped by a rope). In some cases, the rope jumping interruption may also be referred to as rope tripping or another name. This is not limited in the embodiments of this application.

**The wearable device 100 obtains exercise data collected by a sensor.**

The wearable device 100 is worn on a wrist of a user. When an action of the wrist changes, the sensor may sense the action of the wrist, to collect real-time data of the wrist. The sensor may include an acceleration sensor, a gyroscope sensor, a sound collector, and the like. When the wearable device 100 is in a working state, the acceleration sensor in the wearable device 100 may collect acceleration data of the wrist, the gyroscope sensor may collect gyroscope data of the wrist, and the sound collector may collect sound data in an environment in which the user is located.

In some embodiments, the wearable device 100 may collect the acceleration data, the gyroscope data, or the sound data at a fixed sampling frequency (for example, 100 Hz). It can be understood that, the sound data may help the wearable device better identify an exercise status of the user. In some embodiments, the wearable device 100 may not need to obtain the sound data.

**The wearable device 100 may receive an input of the user and enable the rope jumping mode; or determine, based on the data collected by the sensor, to enable the rope jumping mode.**

**Manner 1: The wearable device 100 receives and responds to the input of the user to enable the rope jumping mode.**

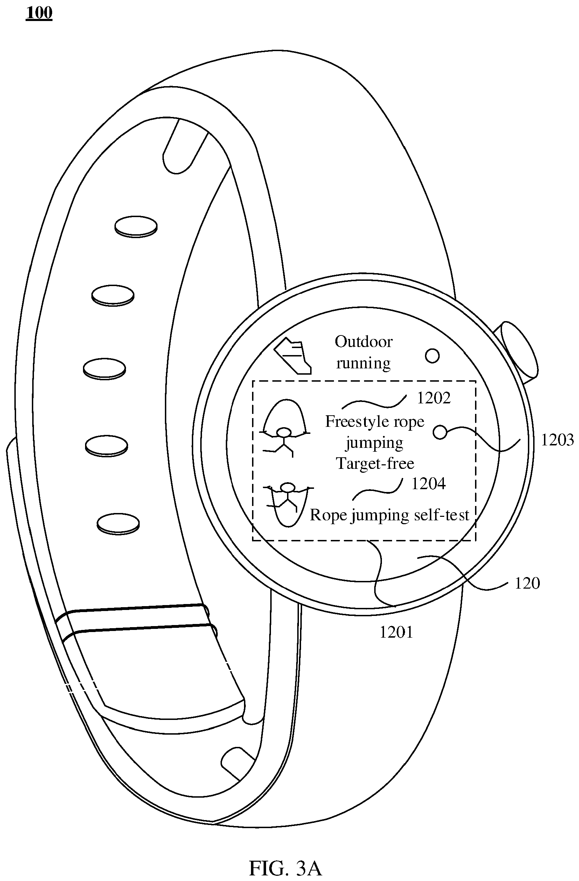

When the wearable device 100 detects an operation performed on an HONOR Health icon on the display 12, the wearable device 100 may start an HONOR Health application. The wearable device 100 may display an HONOR Health interface 120 shown in FIG. 3A. As shown in FIG. 3A, the HONOR Health interface 120 includes but is not limited to a rope jumping mode option 1201 and another exercise mode option. The rope jumping mode option 1201 may be used to start or enable the rope jumping mode. The rope jumping mode option 1201 may include a freestyle rope jumping mode identifier 1202, a setting control 1203 used to set freestyle rope jumping, and a rope jumping self-test mode identifier 1204.

A freestyle rope jumping mode includes target-free rope jumping and target-contained rope jumping, and target-contained rope jumping includes rope jumping modes such as target time, a target quantity, and target calories.

A rope jumping self-test mode includes but is not limited to self-test modes such as a 1-minute rope jumping self-test and a 5-minute rope jumping self-test.

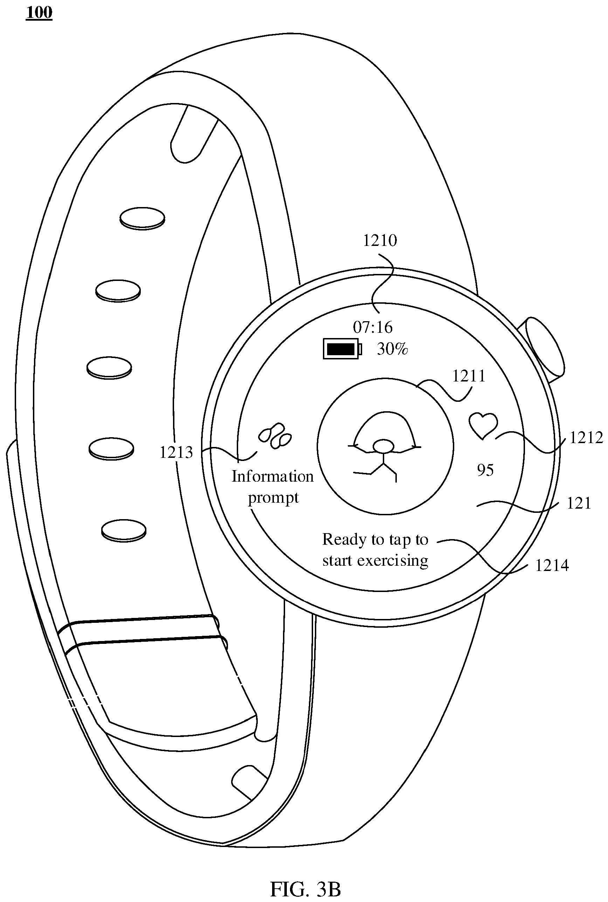

When the wearable device does not enable the rope jumping mode and detects an operation performed on the freestyle rope jumping option 1202 or the rope jumping self-test option 1204, the wearable device 100 may display a rope jumping preparation interface 121 shown in FIG. 3B. As shown in FIG. 3B, the rope jumping preparation interface 121 may include a status bar 1210, a rope jumping identifier 1211, a heart rate identifier 1212, an information prompt identifier 1213, and a prompt box 1214. The prompt box 1214 displays text "Ready to tap to start exercising".

Further, the status bar 1210 may display current power (for example, 30%) of the wearable device 100 and current time (for example, 07:16). The heart rate identifier 1212 is used to display a current heart rate value (for example, 95) of the user.

Further, when the wearable device detects an operation performed on the freestyle rope jumping option 1202, the information prompt identifier 1213 may be specifically an action essential prompt, and the action essential prompt is used by the wearable device 100 to display related information of essentials of a rope jumping action. When the wearable device detects an operation performed on the rope jumping self-test option 1204, the information prompt identifier 1213 may be specifically an evaluation criterion prompt, and the evaluation criterion prompt is used by the wearable device 100 to display related information of an evaluation criterion, for example, an evaluation criterion for 1-minute rope jumping in primary and secondary schools.

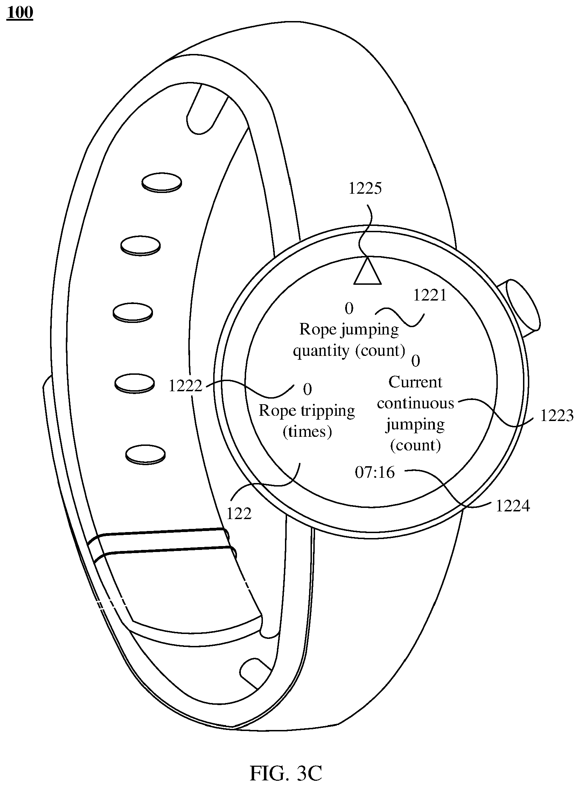

When the wearable device 100 detects a tap operation performed on the rope jumping identifier 1211, the wearable device 100 may display a rope jumping recording interface 122 shown in FIG. 3C. As shown in FIG. 3C, the rope jumping recording interface 122 may include a rope jumping quantity display box 1221, a rope tripping quantity display box 1222, a current continuous jumping display box 1223, a time display box 1224, and a rope jumping pause control 1225.

The wearable device 100 may enable the rope jumping mode after a countdown of specific time (for example, three seconds) after vibration. After the rope jumping mode is enabled, the wearable device 100 may display a current rope jumping quantity in the rope jumping quantity display box 1221, display a current rope tripping quantity in the rope tripping quantity display box 1222, and display a current continuous jumping quantity in the current continuous jumping display box 1223. In this way, the user may be prompted that the wearable device 100 has enabled the rope jumping mode.

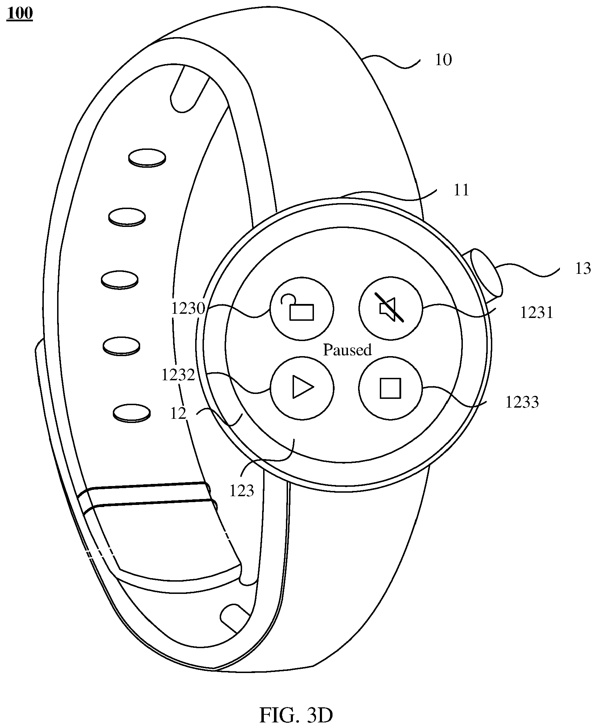

Further, when the wearable device 100 has enabled the rope jumping mode and detects an operation performed on the rope jumping pause control 1225, the wearable device may display a rope jumping pause interface 123 shown in FIG. 3D. As shown in FIG. 3D, the rope jumping pause interface 123 may include a lock control 1230, a mute control 1231, a pause control 1232, and an end control 1233.

When the wearable device 100 detects an operation performed on the end control 1233, the wearable device 100 may display prompt content "The rope jumping data meets a statistical requirement, are you sure to end?" or "The current rope jumping quantity is excessively small and the data will not be recorded, are you sure to end?"; and display prompt controls "Yes" and "No". Further, if the wearable device 100 detects an operation performed on the prompt control "Yes", the wearable device 100 may end the rope jumping mode. It can be understood that, when the rope jumping data meets the statistical requirement, the wearable device 100 may end the rope jumping mode and record the rope jumping data. When the rope jumping data does not meet the statistical requirement, the wearable device 100 may end the rope jumping mode and do not record the rope jumping data.

**In a possible implementation, when the user enables the rope jumping mode for the first time, the user may set a rope jumping target by using the freestyle rope jumping setting control 1203.**

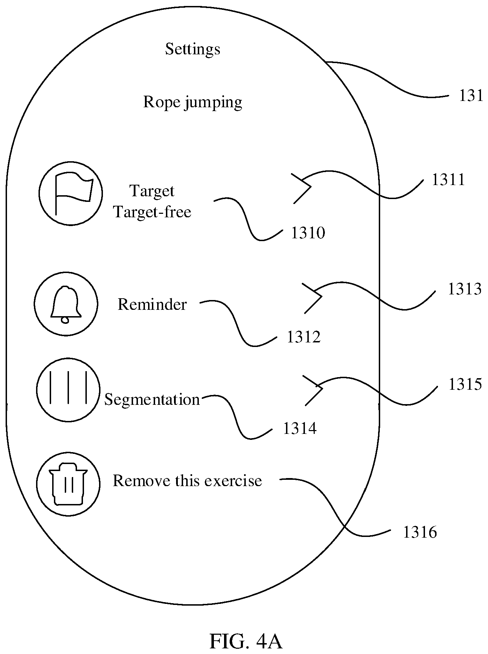

Further, when the wearable device 100 detects an operation performed on the freestyle rope jumping setting control 1203 shown in FIG. 3A, the wearable device 100 may display a freestyle rope jumping setting interface 131 shown in FIG. 4A. As shown in FIG. 4A, the freestyle rope jumping setting interface 131 may include a target option 1310 and a target setting control 1311, a reminder option 1312 and a reminder setting control 1313, a segmentation option 1314 and a segmentation setting control 1315, and a "remove this exercise" option 1316.

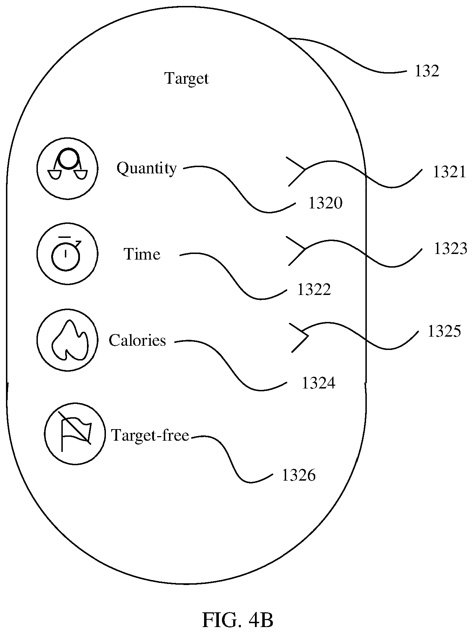

When the wearable device 100 detects an operation performed on the target setting control 1311, the wearable device 100 may display a target setting interface 132 shown in FIG. 4B. As shown in FIG. 4B, the target setting interface 132 may include a quantity option 1320 and a quantity setting control 1321, a time option 1322 and a time setting control 1323, a calorie option 1324, and a calorie setting control 1325, and a target-free option 1326.

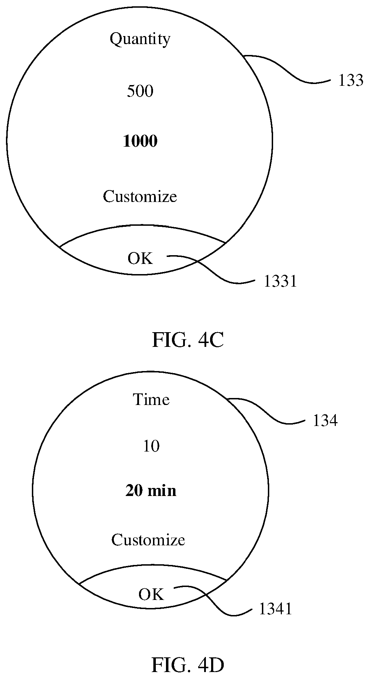

When the wearable device 100 detects an operation performed on the quantity setting control 1321, the wearable device may display a quantity setting interface 133 shown in FIG. 4C. As shown in FIG. 4C, the quantity setting interface 133 may include a 500 option, a 1000 option, a customize option, and a quantity confirm control 1331. The quantity setting interface 133 may alternatively include more or fewer rope jumping quantity options. This is not limited in this embodiment of this application. When the wearable device 100 detects an operation performed on the quantity confirm control 1331, the wearable device 100 may store a rope jumping quantity setting in the freestyle rope jumping mode.

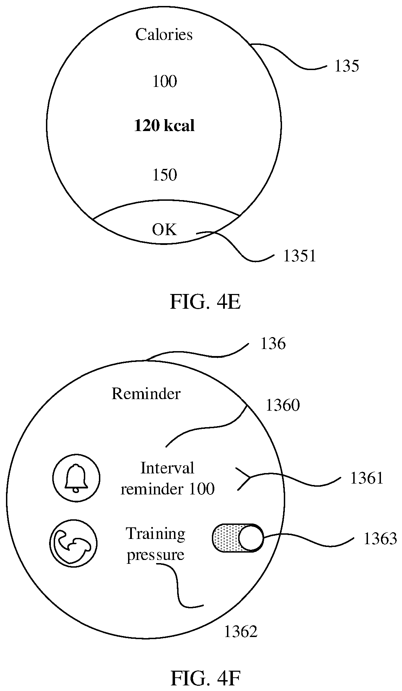

When the wearable device 100 detects an operation performed on the time setting control 1323, the wearable device may display a time setting interface 134 shown in FIG. 4D. As shown in FIG. 4D, the time setting interface 134 may include a 10-minute option, a 20-minute option, a customize option, and a time confirm control 1341. The time setting interface 134 may alternatively include more or fewer rope jumping time options. This is not limited in this embodiment of this application. When the wearable device 100 detects an operation performed on the time confirm control 1341, the wearable device 100 may store a rope jumping time setting in the freestyle rope jumping mode. When the wearable device 100 detects an operation performed on the calorie setting control 1325, the wearable device may display a calorie setting interface 135 shown in FIG. 4E. As shown in FIG. 4E, the calorie setting interface 135 may include a 100 kcal option, a 120-minute option, a 150 kcal option, a customize option, and a calorie confirm control 1351. The calorie setting interface 135 may alternatively include more or fewer rope jumping calorie options. This is not limited in this embodiment of this application. When the wearable device 100 detects an operation performed on the calorie confirm control 1351, the wearable device 100 may store a rope jumping calorie setting in the freestyle rope jumping mode.

When the wearable device 100 detects an operation performed on the target-free option 1326, it indicates that rope jumping has no time and quantity limitation.

When the wearable device 100 detects an operation performed on the reminder setting control 1313, the wearable device 100 may display a reminder setting interface 136 shown in FIG. 4F. As shown in FIG. 4F, the reminder setting interface 136 may include an interval reminder option 1360 and an interval reminder setting control 1361; and a training pressure option 1362 and a training pressure button 1363. The interval reminder setting control 1361 is used by the wearable device 100 to remind the user in a voice or vibration form based on a specified interval in a rope jumping process of the user. An interval reminder may be set based on an actual requirement of the user, for example, a quantity 50 or a quantity 100, or 5 minutes or 10 minutes. When the wearable device 100 detects an operation performed on the training pressure button 1363, the wearable device 100 may enable training pressure.

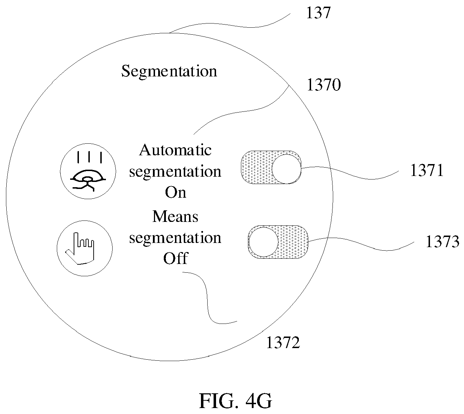

When the wearable device 100 detects an operation performed on the segmentation setting control 1315, the wearable device may display a segmentation setting interface 137 shown in FIG. 4G. As shown in FIG. 4G, the segmentation setting interface 137 may include an automatic segmentation option 1370 and an automatic segmentation button 1371; and an automatic segmentation option 1372 and an automatic segmentation button 1373. After the wearable device 100 detects an operation performed on the automatic segmentation button 1371 and enables automatic segmentation, the wearable device 100 automatically segments rope jumping data each time rope jumping stops. After the wearable device 100 detects an operation performed on the automatic segmentation button 1373 and enables manual segmentation, in a rope jumping process, manual segmentation needs to be performed by using a lower button.

It can be understood that, when the user does not enable the rope jumping mode for the first time, the wearable device 100 may record a rope jumping situation of the user based on a previously stored setting; or the wearable device 100 may record the rope jumping situation of the user based on a currently stored device.

**In some other embodiments, after the wearable device 100 establishes a communication connection to the terminal device 200, the wearable device 100 may alternatively start the rope jumping mode by receiving a rope jumping mode enabling request sent by the terminal device 200.**

The wearable device 100 may establish a communication connection relationship with the terminal device 200 (for example, a mobile phone or a tablet computer). When detecting a user operation used to enable or end the rope jumping mode, the terminal device 200 may send an instruction for enabling the rope jumping mode to the wearable device 100. When the wearable device 100 receives the instruction used to enable the rope jumping mode, the wearable device 100 may enable the rope jumping mode.

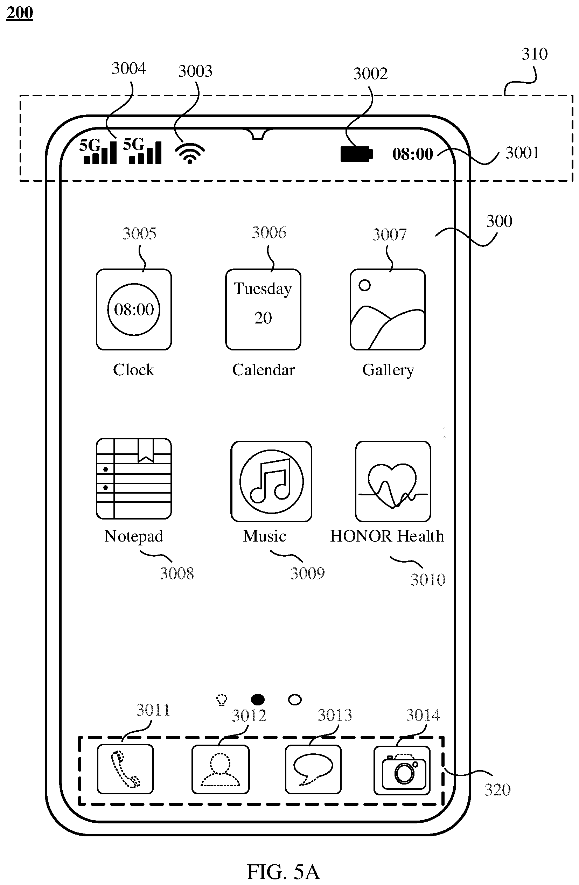

FIG. 5A shows a user interface 300 of a home screen of the terminal device 200. The user interface 300 may include a status bar 310, a tray 320 with icons of frequently used applications, and icons of other applications. The status bar 310 may include a time indicator 3001, a battery status indicator 3002, one or more signal strength indicators 3003 of a wireless fidelity (wireless fidelity, Wi-Fi) signal, and one or more signal strength indicators 3004 of a mobile communication signal (which may also be referred to as a cellular signal). The tray 320 with icons of frequently used applications may display: a Phone icon 3011, a Contacts icon 3012, a Messages icon 3013, and a Camera icon 3014. The icons of other applications may be, for example, a Clock icon 3005, a Calendar icon 3006, a Gallery icon 3007, a Notepad icon 3008, a Video icon 3009, an HONOR Health icon 3010, and an icon of another application (for example, Gallery). An icon of any application may be used to respond to a user operation (for example, a tap operation), so that the terminal device 200 starts the application corresponding to the icon. The HONOR Health icon 3010 may be used to start the application HONOR Health. The application HONOR Health may be used to establish a communication connection relationship between the terminal device 200 and the wearable device 100. The terminal device 200 may display exercise data of a user to the user by using the application HONOR Health.

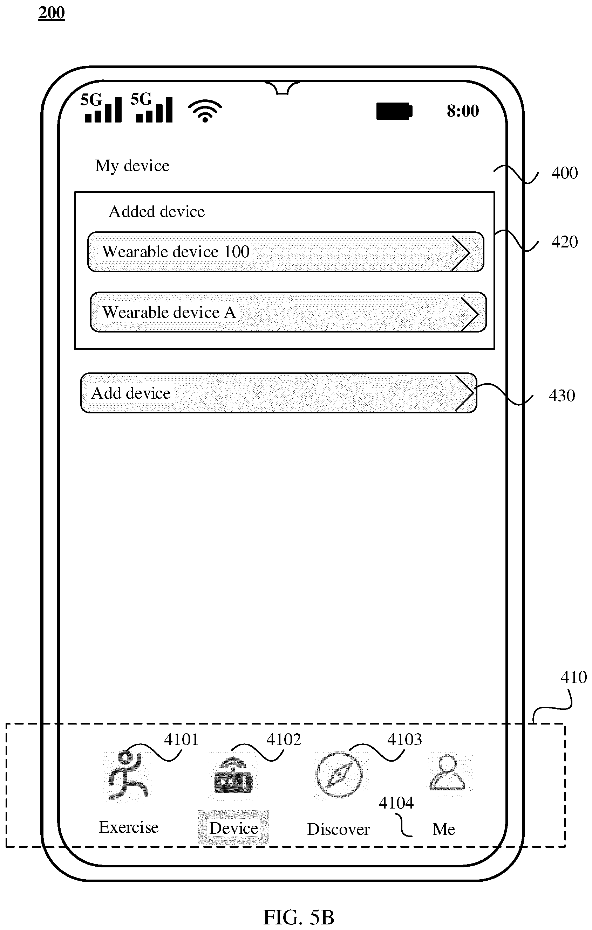

The terminal device 200 may receive and respond to a user operation (for example, a tap operation) performed on the HONOR Health icon 3010, and the terminal device 200 may display an HONOR Health application interface 400 shown in FIG. 5B.

FIG. 5B is a schematic diagram of the application interface 400 of the terminal device 200. The application interface 400 may include an interface viewing option 410. The interface viewing option 410 may include an Exercise option 4101, a Device option 4102, a Discover option 4103, and a Me option 4104. Any option may be used to respond to a user operation (for example, a tap operation), so that the terminal device 200 displays content corresponding to the option in the application interface 400. For example, content corresponding to the Device option 4102 may include information about a device that has been added to the electronic device and a control used to add a new device. When the terminal device 200 detects a user operation (for example, a tap operation) performed on the Device option 4102, the terminal device 200 may display an Added device option 420 and an Add device option 430.

The Add device option 430 may be used to trigger the terminal device 200 to add a new device. The new device is a device that establishes a communication connection relationship with the terminal device 200 for the first time. When the terminal device 200 detects a user operation (for example, a tap operation) performed on the Add device option 430, the terminal device 200 may display an Add device setting interface, so that the terminal device 200 establishes a communication connection relationship with the new device. The Add device setting interface may be used by a user to search for a new device and establish a communication connection manner, for example, a Bluetooth connection. A process in which the terminal device 200 establishes a communication connection relationship with a new device is not limited in this embodiment of this application.

The Added device option 420 may include identifiers of a plurality of wearable devices. The plurality of wearable devices all have established a communication connection relationship with the terminal device 200. For example, the terminal device 200 has established a communication connection relationship with the wearable device 100 and a wearable device A. When detecting a user operation (for example, a tap operation) performed on any device option in the Added device option 420, the electronic device may display related information corresponding to the device.

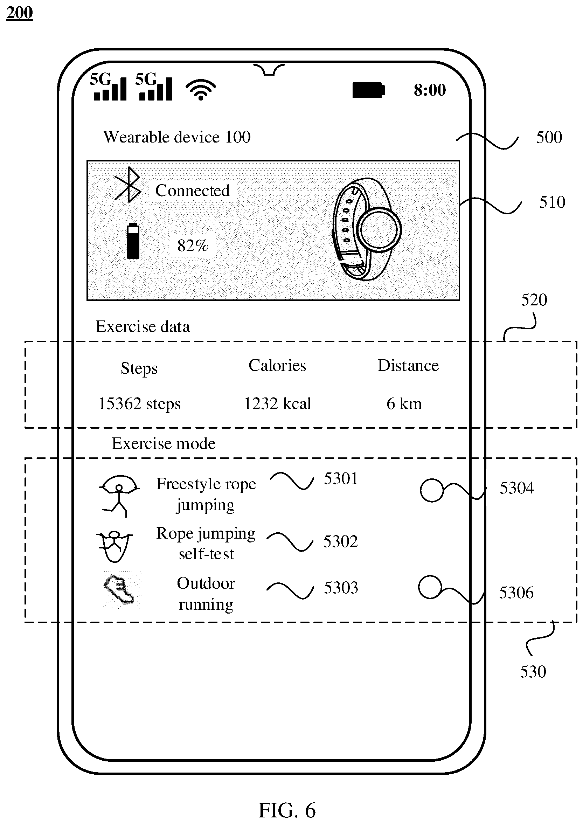

When the terminal device 200 detects a user operation (for example, a tap operation) performed on an identifier of the wearable device 100 in the Added device option 420, the terminal device 200 may display a schematic diagram that is of an application interface 500 of the terminal device 200 and that is shown in FIG. 6.

The application interface 500 shown in FIG. 6 may include a device status bar 510, exercise data 520, and an exercise mode option 530. The device status bar 510 may be used to display a connection status between the wearable device 100 and the terminal device 200 and power of the wearable device 100. For example, when it is detected that the terminal device 200 establishes a communication connection relationship with the wearable device 100 through Bluetooth connection, the device status bar 510 may prompt that a connection manner is a Bluetooth connection and a connection status is "connected". Further, the terminal device 200 may obtain power information of the wearable device 100. The device status bar 510 may prompt current power (for example, 77%) of the wearable device 100. The device status bar 510 may prompt more content, and this is not limited in this embodiment of this application. The exercise data 520 may include a quantity of movement steps, consumed calories, and a movement distance of a user that are recorded by the wearable device 100. Data in the exercise data 520 is data that is of the user in one day and that is recorded by the wearable device 100 in a working state (for example, including a total quantity of movement steps, consumed calories, and a movement distance during daily activities of the user such as walking, rope jumping, and running).

The exercise mode option 530 may be used to enable or end exercise modes such as freestyle rope jumping, a rope jumping self-test, and outdoor running. The exercise mode option 530 may include a freestyle rope jumping identifier 5301, a setting control 5304 used to set freestyle rope jumping, a rope jumping self-test identifier 5302, an outdoor running identifier 5303, and a control 5306 used to set outdoor running.

A freestyle rope jumping mode includes target-free rope jumping and target-contained rope jumping, and target-contained rope jumping includes rope jumping modes such as target time, a target quantity, and target calories. The freestyle rope jumping setting control 5304 may be used to set the freestyle rope jumping mode. For related description, refer to the description of freestyle rope jumping on the wearable device 100. Details are not described herein again.

A rope jumping self-test mode includes but is not limited to rope jumping modes such as a 1-minute rope jumping self-test and a 5-minute rope jumping self-test.

In response to a user operation (for example, a tap) performed on the freestyle rope jumping option 5301, the terminal device 200 may send an instruction for enabling the freestyle rope jumping mode to the wearable device 100. Alternatively, in response to a user operation (for example, a tap) performed on the rope jumping self-test option 5302, the terminal device 200 may send an instruction for enabling the rope jumping self-test mode to the wearable device 100. When the wearable device 100 receives the instruction that is sent by the terminal device 200 and that is for enabling the freestyle rope jumping mode or the rope jumping self-test mode, the wearable device 100 may enable the rope jumping mode after specific time (for example, a countdown of three seconds) after vibration. When the freestyle rope jumping mode or the rope jumping self-test mode is enabled, the wearable device 100 may display the rope jumping recording interface 122 shown in FIG. 3C. In this way, the user may be prompted that the wearable device 100 has recorded rope jumping of the user.

When receiving an instruction that is sent by the terminal device 200 and that is for ending the rope jumping mode, the wearable device 100 may end the rope jumping mode after specific time (for example, a countdown of three seconds) after vibration.

In addition, when the rope jumping mode is enabled, the wearable device 100 may automatically enable a do-not-disturb mode. For example, when the do-not-disturb mode is enabled, if the terminal device 200 receives an incoming call or a message notification, the wearable device 100 may shield a reminder instruction sent by the electronic device for the incoming call or the message notification. In other words, the wearable device 100 does not remind the user of the incoming call or the message notification through vibration, ringing, or the like. In this way, when the wearable device 100 has enabled the rope jumping mode and there is an incoming call or a message notification, the wearable device 100 does not interfere with rope jumping of the user.

**Manner 2: The wearable device 100 determines, based on the data collected by the sensor, to start the rope jumping mode.**

**The wearable device 100 may adaptively enable the rope jumping mode.**

When the wearable device 100 does not enable the rope jumping mode and detecting that a user is in a rope jumping state, the wearable device 100 may automatically enable the rope jumping mode. The wearable device 100 may determine, in the following manner, that the user is in the rope jumping state: The acceleration sensor and the gyroscope sensor can collect acceleration data and gyroscope data. The wearable device 100 may obtain an acceleration waveform feature graph and an angular velocity waveform feature graph based on the acceleration data and the gyroscope data, and then the wearable device 100 may input the acceleration waveform feature graph and the angular velocity waveform feature graph to an exercise classification model. The exercise classification model is trained in advance, and the exercise classification model may analyze an exercise type of the user (for example, rope jumping, running, or swimming) based on input exercise data. If the exercise classification model learns, through analysis based on the acceleration waveform feature graph and the angular velocity waveform feature graph, that the user is doing a rope jumping exercise, the wearable device 100 may determine that the user is in the rope jumping state.

In a possible implementation, after obtaining the acceleration waveform feature graph and the angular velocity waveform feature graph, the wearable device 100 determines that the user is doing a suspected rope jumping exercise, and then inputs the acceleration waveform feature graph and the angular velocity waveform feature graph to the exercise classification model. The exercise classification model further determines that the user is doing the rope jumping exercise. The wearable device 100 does not directly input, to the classification model, the acceleration data and the gyroscope data collected by the acceleration sensor and the gyroscope sensor. In this way, a calculation amount of the exercise classification model can be reduced, consumption can be reduced, and accuracy of determining by the classification model can be improved.

In some other embodiments, the wearable device 100 may alternatively directly input, to the exercise classification model, the acceleration data and the gyroscope data collected by the acceleration sensor and the gyroscope sensor, and the exercise classification model directly outputs that the user is doing the rope jumping exercise or the user is not doing the rope jumping exercise. The wearable device 100 may alternatively determine, in another manner, that the user is in the rope jumping state. This is not limited in this embodiment of this application.

In some embodiments, when the wearable device 100 enables another exercise mode, such as a running mode, but detects that the user is in the rope jumping state, the wearable device 100 may automatically switch the another exercise mode to the rope jumping mode.

In some embodiments, when the wearable device 100 enables the rope jumping mode and detects that the user is not in the rope jumping state, the wearable device 100 may automatically end the rope jumping mode. The wearable device 100 may determine, in the following manner, that the user is not in the rope jumping state: If the wearable device 100 learns, through calculation based on the collected acceleration data and gyroscope data, that a waveform presented by the acceleration data or the gyroscope data in a rope jumping period is not a sine wave, the wearable device 100 may determine that the user is not in the rope jumping state. The wearable device 100 may alternatively determine, in another manner, that the user is not in the rope jumping state. This is not limited in this embodiment of this application.

In this way, when the user is performing rope jumping but forgets to enable the rope jumping mode, or an enabled exercise mode is selected incorrectly, the wearable device 100 may adaptively enable the rope jumping mode to monitor an overall action and exercise data of the user during current rope jumping, so as to record a rope jumping process of the user. In addition, when the user forgets to end the rope jumping mode after enabling the rope jumping mode, the wearable device 100 may adaptively end the rope jumping mode to reduce power consumption of the wearable device 100. In addition to enabling the rope jumping mode by monitoring a user operation performed on the touch control 13 and receiving an instruction sent by the terminal device 200, and adaptively enabling the rope jumping mode, the wearable device 100 may further enable the rope jumping mode in another manner, for example, enabling the rope jumping mode by using a motion sensing gesture. This is not limited in this application.

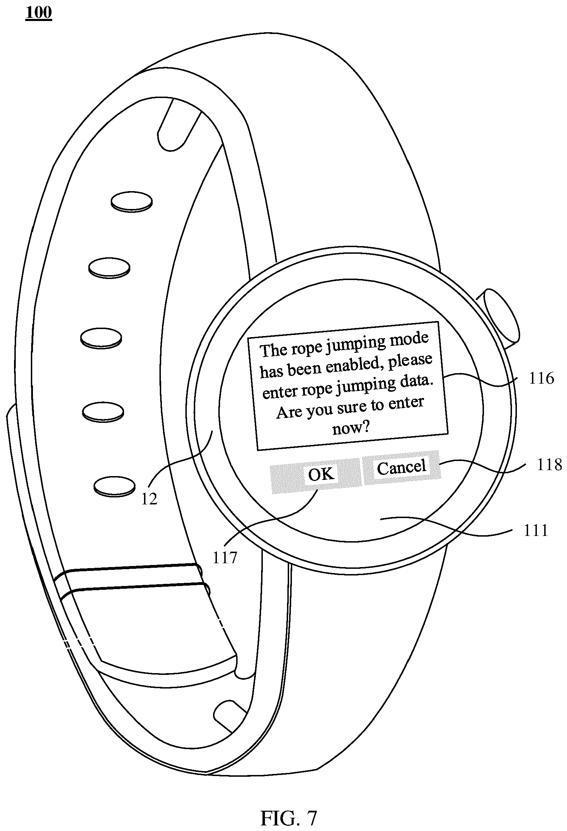

In some embodiments, after the wearable device 100 adaptively enables the rope jumping mode, the wearable device 100 may display, on the display 12, a user interface 111 shown in FIG. 7. The user interface 111 may include a prompt box 116, an OK control 117, and a Cancel control 118.

The prompt box 116 includes prompt content. The prompt content is used to prompt the wearable device 100 to prompt, after the rope jumping mode is enabled, the user to enter rope jumping exercise data. The prompt content may include "The rope jumping mode has been enabled, please enter rope jumping data. Are you sure to enter now?".

The OK control 117 may be used to receive a user operation (for example, a tap) to determine to enter the rope jumping exercise data. The Cancel control 118 may be used to receive a user operation (for example, a tap) to cancel entry of the rope jumping exercise data.

If the user currently wants to enter personal exercise data, the user may tap the OK control 117. If the user currently does not want to enter the personal exercise data, the user may tap the Cancel control 118.

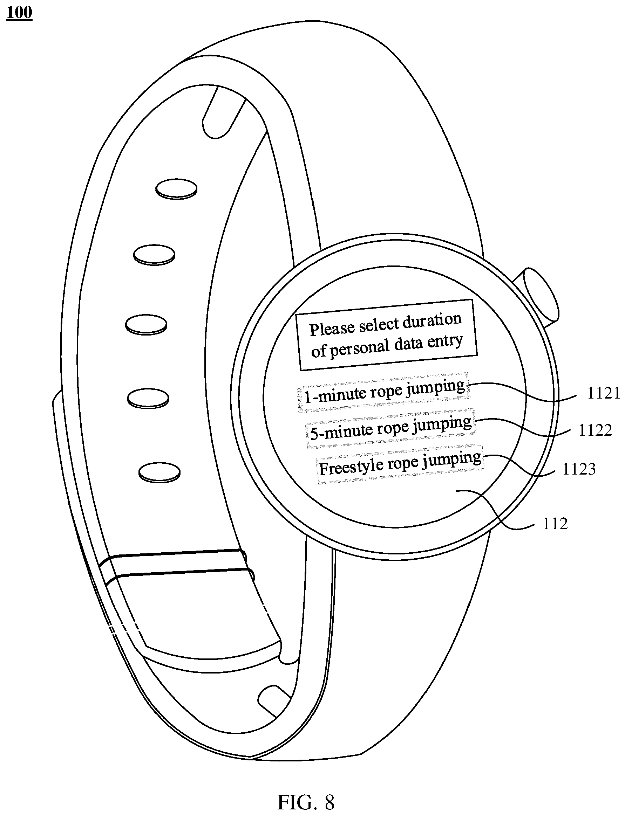

When detecting a user operation performed on the OK control 117, the wearable device 100 displays, on the display 12, a user interface 112 shown in FIG. 8. The user interface 112 includes a prompt box, and the prompt box may be used to prompt the user to select a length of time for entering the personal exercise data.

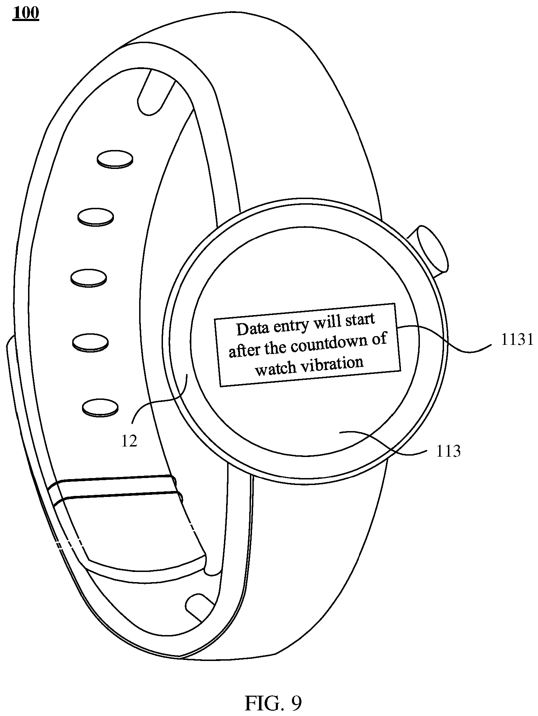

The user interface 112 may further include a 1-minute rope jumping option 1121, a 5-minute rope jumping option 1122, and a freestyle rope jumping option 1123. The user interface 112 may further include more or fewer options, for example, a countdown rope jumping option and a countdown rope jumping option. This is not limited in this application. It can be understood that, the 1-minute rope jumping option 1121 and the 5-minute rope jumping option 1122 may be considered as fixed-time rope jumping. Jumping starts after time is set, and the wearable device 100 may give a reminder through vibration or a voice after the time ends. The freestyle rope jumping option 1123 may be considered as a latest setting for a rope jumping target by the user based on a freestyle rope jumping setting control. In response to a user operation (for example, a tap) performed on any option in the user interface 112 shown in FIG. 8, the wearable device 100 may display, on the display 12, a user interface 113 shown in FIG. 9. The user interface 113 includes a prompt box 1131, and the prompt box 1131 prompts the user that data entry starts after a wristband vibrates. The prompt box 1131 includes prompt content "Data entry will start after the countdown of watch vibration".

When the vibration countdown ends, the wearable device 100 starts to enter the personal exercise data. Further, the wearable device 100 may enter an exercise data packet of the user at a fixed entry frequency (for example, 100 ms), and each exercise data packet may include ten groups of exercise data.

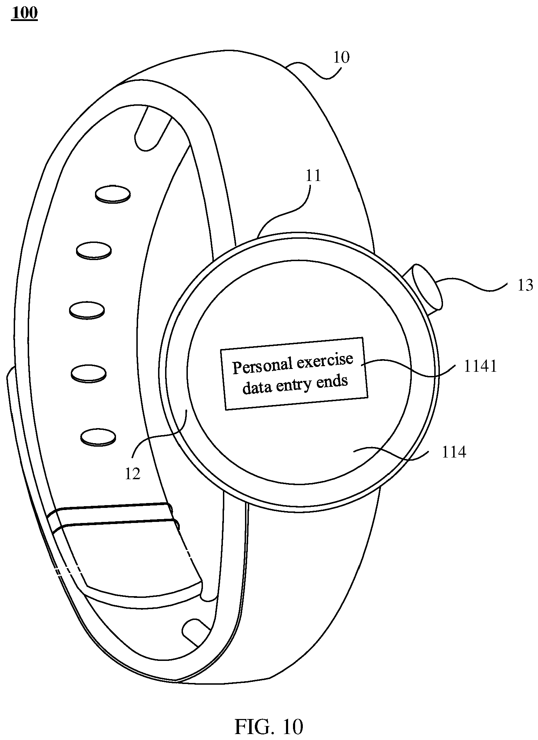

When the wearable device 100 detects that a time length corresponding to a selected option elapses from the start of personal exercise data entry, the wearable device 100 may vibrate and display, on the display 12, a user interface 114 shown in FIG. 10. Alternatively, after the wearable device 100 detects that the user stops the rope jumping exercise, the wearable device 100 may vibrate and display, on the display 11, the user interface 114 shown in FIG. 10. The user interface may be used to prompt the user that personal exercise data entry ends.

The user interface 114 shown in FIG. 10 includes a prompt box 1141, and the prompt box 1141 is used to prompt the user that personal exercise data entry ends. The prompt box 1141 includes prompt content "Personal exercise data entry ends".

When the user enters the personal exercise data, that is, when the user performs a rope jumping action, it is inconvenient for the user to directly view content on the display 12. The wearable device 100 may vibrate to prompt the user that personal exercise data entry of the user ends. In this way, the user may stop performing the rope jumping action after the wearable device 100 vibrates.

**The following describes that the wearable device 100 analyzes a rope jumping situation of a user based on entered exercise data.**

**First, a process in which the wearable device 100 determines an iterative window width, and performs peak searching based on the iterative window width is described.**

After the rope jumping mode is enabled, both the acceleration sensor and the gyroscope sensor in the wearable device 100 are in a working state. The acceleration sensor may be configured to collect acceleration data of a wrist, and the gyroscope sensor may be configured to collect gyroscope data of the wrist. The wearable device 100 needs to preprocess entered acceleration processing and gyroscope data, to obtain processed speed processing and gyroscope data.

It can be understood that, a rope jumping frequency of a rope jumping exercise may be greater than or equal to a first threshold and less than or equal to a second threshold. The first threshold and the second threshold may be values that are manually set based on experience and that are used for reference and comparison. Generally, a normal range in which the user does the rope jumping exercise is from 30 times/minute to 300 times/minute. Therefore, the first threshold may be 0.5 Hz, and the second threshold may be 5 Hz. Because noise interference inevitably exists when the sensors collect the acceleration data and the gyroscope data of the wrist, to improve accuracy of rope jumping recording, the wearable device 100 may filter the entered acceleration data and gyroscope data by using a band-pass filter, to filter out high and low frequency noise that exists in the acceleration data and the entered gyroscope data.

Next, in a process of analyzing the rope jumping situation of the user, the wearable device 100 may iteratively calculate, in each preset period, the iterative window width based on target exercise data collected by one or more motion sensors in a target time period. A specific process of determining the iterative window width through iterative calculation includes the following steps. Step 1: The wearable device 100 obtains a preset window width d₀ or a window width dᵢ₋₁ obtained in previous iterative calculation, where the preset window width may be manually set based on experience and built into the wearable device 100. It can be understood that, when the wearable device 100 iteratively calculates a window width for the first time, the window width obtained by the wearable device 100 is the preset window width. When the wearable device does not iteratively calculate the window width for the first time, the wearable device 100 may obtain the window width obtained in previous iterative calculation, where i is a current iteration quantity.

Step 2: The wearable device 100 may perform, based on the preset window width d₀ or the window width dᵢ₋₁ obtained in previous iterative calculation, peak searching on the target exercise data collected by the one or more motion sensors in the target time period, to obtain a preset peak quantity Nᵢ. It can be understood that, the target time period is a time period related to a current preset period. For example, it is assumed that the preset period is one second and a time length t of the target time period is 30 seconds. In a 0^{th} preset period, that is, when the wearable device 100 starts to detect a rope jumping status of the user, the target time period may be from a 0^{th} second to a 30^{th} second. In a T^{th} preset period, the target time period may be from a T^{th} second to a (30+T)^{th} second. The time length t of the target time period may be set based on an actual situation, and is not limited in this embodiment of this application.

Step 3: The wearable device 100 may obtain a reference window width Dᵢ of the target exercise data based on the preset peak quantity Nᵢ, to be specific, Dᵢ=1/fᵢ, and fᵢ=Nᵢ/t.

Step 4: The wearable device 100 may perform peak searching on the target exercise data again based on the reference window width Dᵢ, to obtain a reference peak quantity N^ᵢ.

Step 5: The wearable device 100 may determine the iterative window width based on the preset peak quantity and the reference peak quantity.

Specifically, the wearable device may obtain a preset rope jumping frequency fᵢ=Nᵢ/t of the target exercise data based on the preset peak quantity and the time length t of the target time period.

The wearable device may obtain a reference rope jumping frequency f^ᵢ=N^ᵢ/t of the target exercise data based on the reference peak quantity N^ᵢ and the time length T of the target time period.

The wearable device 100 may calculate an absolute value |fᵢ-f^ᵢ| of a difference between the preset rope jumping frequency fᵢ and the reference rope jumping frequency f^ᵢ. If the absolute value of the difference is less than a reference threshold, the iterative calculation ends, and it is determined that the iterative window width in the target time period in the current preset period is dᵢ. If the absolute value of the difference is greater than or equal to the reference threshold, step 6 is performed. It is easy to understand that a case of "equal to" may alternatively be placed in another branch. For example, if the absolute value of the difference is less than or equal to the reference threshold, the iterative calculation ends, and it is determined that the iterative window width in the current time period is dᵢ.

Step 6: The wearable device 100 updates the iterative window width based on the preset window width dᵢ and the reference window width Dᵢ, where an updated iterative window width is dᵢ₋₁=(dᵢ+Dᵢ)/2. If the current iteration quantity i is less than a preset iteration quantity, the wearable device 100 jumps to step 2, and performs an (i+1)^{th} iterative calculation based on the updated window width. If the iteration quantity i is greater than or equal to the preset iteration quantity, it is determined that the iterative window width in the target time period in the current preset period is (dᵢ+Dᵢ)/2. It is easy to understand that a case of "equal to" may alternatively be placed in another branch. For example, if the iteration quantity is less than or equal to the preset iteration quantity, the wearable device 100 jumps to step 2, and performs an (i+1)^{th} iterative calculation based on the updated window width.

In each preset period, after determining the iterative window width in the target time period based on the target exercise data, the wearable device 100 may perform peak searching on the target exercise data in the target time period based on the iterative window width, to determine peaks included in the target exercise data, and a peak quantity, a peak location, a peak height, and the like. The peak searching may be specifically searching for local maximums of the target exercise data in a target window width. Further, the wearable device 100 may detect a peak point of the target exercise data based on the target window width by using a peak detection algorithm. The peak detection algorithm may be a Hough-based peak detection algorithm.

The peak location is used to indicate location information of a moment at which a peak is located, and the peak height is used to indicate height information of a moment at which a peak is located.

**The following describes that the wearable device 100 outputs, based on the peaks included in the target exercise data, a rope jumping status of a user in the target time period.**

A rope jumping status at a target moment may be determined by a decision model. Therefore, a principle of the decision model and a training process of the decision model are first described.

A decision mode may be a random forest but is not limited to the algorithm model. For example, a neural network or another tree model may be used. This is not limited in this embodiment of this application. The following is described by using a random forest-based decision model as an example.

The random forest (Random Forest, RF)-based model is a model that is integrated by a plurality of decision tree models and that is used to resolve a classification problem or a regression problem.

The decision tree model may use various decision tree algorithms, for example, an input data 3 (Input Data3, ID3) algorithm or a classification and regression tree (Classification And Regression Tree, CART) algorithm. Each decision tree in the random forest-based model is independently trained and predicted. For a classification problem, a classification result is determined through voting based on classification results of the plurality of decision tree models. For a regression problem, a regression result is determined by an average value of predicted values of the plurality of decision tree models.

The decision tree in the random forest is described, and the decision tree includes a node and a directed edge. There are two types of nodes: an internal node and a leaf node, where the internal node represents a feature or an attribute and the leaf node represents a class. Generally, one decision tree includes one root node, several internal nodes, and several leaf nodes. The leaf node corresponds to a decision result, and each other node corresponds to an attribute test. A sample set included in each node is distributed to a subnode based on a result of the attribute test. The root node includes a sample set, and a path from the root node to each leaf node corresponds to a determining test sequence.

In a training process of the random forest-based decision model, a time domain feature and a frequency domain feature of each piece of training sample data first need to be extracted. The time domain feature includes a peak interval and a peak-to-valley value, and the frequency domain feature includes a dominant frequency energy proportion and the like.

In this embodiment of this application, each piece of sample data includes exercise data collected by the acceleration sensor and the gyroscope sensor. Because the acceleration sensor and the gyroscope sensor are three-axis sensors, each piece of collected sample data includes X-axis exercise data, Y-axis exercise data, and Z-axis exercise data. In other words, each piece of sample data may include six groups of exercise data (to be specific, X-axis acceleration data, Y-axis acceleration data, Z-axis acceleration data, X-axis gyroscope data, Y-axis gyroscope data, and Z-axis gyroscope data). Therefore, the wearable device 100 may extract the time domain feature and the frequency domain feature of each piece of sample data based on peaks included in each piece of sample data, and there are a total of 18 features.

The 18 features are:
a peak interval corresponding to the X-axis acceleration data, a peak interval corresponding to the Y-axis acceleration data, and a peak interval corresponding to the Z-axis acceleration data;
a peak-to-valley value corresponding to the X-axis acceleration data, a peak-to-valley value corresponding to the Y-axis acceleration data, and a peak-to-valley value corresponding to the Z-axis acceleration data;
a dominant frequency energy proportion corresponding to the X-axis acceleration data, a dominant frequency energy proportion corresponding to the Y-axis acceleration data, and a dominant frequency energy proportion corresponding to the Z-axis acceleration data;
a peak-to-valley value corresponding to the X-axis gyroscope data, a peak-to-valley value corresponding to the Y-axis gyroscope data, and a peak-to-valley value corresponding to the Z-axis gyroscope data;
a peak interval corresponding to the X-axis acceleration data, a peak interval corresponding to the Y-axis acceleration data, and a peak interval corresponding to the Z-axis acceleration data; and
a dominant frequency energy proportion corresponding to the X-axis acceleration data, a dominant frequency energy proportion corresponding to the Y-axis acceleration data, and a dominant frequency energy proportion corresponding to the Z-axis acceleration data.

**The dominant frequency energy proportion is obtained:** It can be understood that, distribution of signal energy with a frequency can be learned by using a power spectral density function. The dominant frequency energy proportion is a proportion of a dominant frequency in power spectral density data corresponding to entire training sample data, and the dominant frequency is a frequency at which energy is most concentrated in power spectral density.

Specifically, in a preset period, short-time Fourier transform processing is performed on each piece of sample data, to obtain power spectral density corresponding to each piece of sample data at different moments. A window size and a step are first set. A window is allowed to slide on a time domain signal, and a Fourier transform of each window is calculated, to form power spectral density data corresponding to different time windows, and distribution of power spectral density with a frequency can be obtained by concatenating the power spectral density data. The window may be one or more of the following: a Hamming (Hamming) window, a rectangular window, a Hanning window, a Gaussian window, and the like. The dominant frequency energy proportion of each piece of training sample data can be obtained from the distribution of the power spectral density with the frequency.

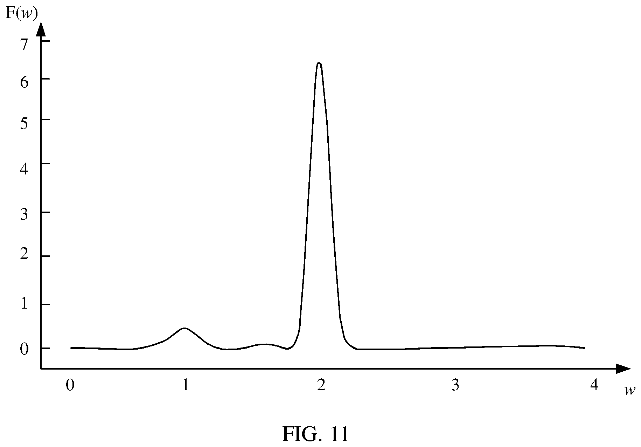

For example, FIG. 11 is a schematic diagram of a dominant frequency energy proportion according to an embodiment of this application. After short-time Fourier transform processing is performed on the sample data based on a Hamming window, power spectral density of the sample data may be obtained, and the dominant frequency energy proportion shown in FIG. 11 can be obtained from the power spectral density of the sample data. When a short-time Fourier transform is performed on the sample data, a window size of the used Hemming window may be 2s, and a step may be s, where s is a minimum time unit, and may be one second or may be two seconds. This is not limited in this embodiment of this application. It can be learned from the dominant frequency energy proportion shown in FIG. 11 that the dominant frequency is concentrated, and is concentrated at a frequency of about 2 Hz.

**The peak interval is calculated:** In each preset period, the wearable device 100 may select an ineffective peak and an effective peak in each piece of sample data based on the peak interval, where a peak interval between effective peaks is a data feature of the training sample data in time domain.

In each preset period, the wearable device 100 may calculate a peak interval between any two adjacent peaks in peaks included in the sample data in the target time period. When the peak interval is less than a first preset threshold, it may be determined that the former in the two adjacent peaks is an ineffective peak; and when the peak interval is greater than or equal to the first preset threshold, it may be determined that the former in the two adjacent peaks is an effective peak. It is easy to understand that a case of "equal to" may alternatively be placed in another branch. For example, when the interval between the any two adjacent peaks is less than or equal to the first preset threshold, it may be determined that the former in the adjacent peaks is an ineffective peak. After determining the ineffective peak, the wearable device 100 may mark the ineffective peak, record an index of the ineffective peak (for example, time at which the ineffective peak appears in the training sample data), and calculate a peak interval between effective peaks.

**The peak-to-valley value is calculated:** In each preset period, the wearable device 100 selects an ineffective peak and an effective peak in each piece of sample data based on the peak-to-valley value. A peak-to-valley value between an effective peak and a nearest valley after the effective peak is a data feature of the training sample data in time domain.

It can be understood that, the wearable device 100 may extract valley information in each piece of training sample data in a monotonically decreasing manner or a manner of detecting an amplitude threshold of a valley value. Then, the wearable device 100 calculates a height difference between a peak in exercise data in a first time period T and a valley corresponding to the peak, and records the height difference as a peak-to-valley value pv. Further, the wearable device 100 calculates a ratio pvr=pvᵢ₊₁/pvᵢ between a peak-to-valley value pvᵢ of a first peak and a peak-to-valley value of a second peak pvᵢ₊₁. If the ratio is less than a second preset threshold, it may be determined that the former in the first peak and the second peak is an ineffective peak; and if the ratio is greater than or equal to the second preset threshold, it may be determined that the former in the first peak and the second peak is an effective peak. A case of "equal to" may alternatively be placed in another branch. For example, if the ratio is less than or equal to the second preset threshold, it may be determined that the former in the first peak and the second peak is an ineffective peak.

After determining the ineffective peak, the wearable device 100 marks the ineffective peak, records an index of the ineffective peak (for example, time at which the ineffective peak appears in the training sample), and calculates a peak-to-valley value of the effective peak. In other words, the wearable device 100 may record the index of the ineffective peak in the peak-to-valley value.

It is easy to understand that in a rope jumping process, a user may be in one or more of the following rope jumping statuses: a rope jumping interruption state, an accelerated jumping state, a decelerated jumping state, a uniform-speed jumping state, and a variable-speed jumping state. Therefore, the sample data may include data in the rope jumping interruption state, data in the accelerated jumping state, data in the decelerated jumping state, and data in the variable-speed jumping state. Model training includes a training process and a test process, and the sample data includes training sample data and test sample data. First, a device that needs to be used to train a decision model may label each piece of training sample data based on a rope jumping status of the training sample data, and the label is used to notify the random forest-based decision model of a current rope jumping status of the training sample data. Then, a data feature of each piece of training sample data and the label of each piece of training sample data are input to the decision model, to train the decision model. The test sample data is used to converge a trained decision model. After performance of the decision model is converged, a trained decision model can be obtained.

**The following describes that the wearable device 100 determines a rope jumping status of a user in the target time period based on the target exercise data.**

When the trained decision model is obtained, the wearable device 100 may determine, by using the trained decision model, a specific rope jumping status that is of the user in the target time period and that is in a rope jumping interruption state, an accelerated jumping state, a decelerated jumping state, a uniform-speed jumping state, and a variable-speed jumping state.

Specifically, in each preset period, the wearable device 100 may extract a frequency domain feature (for example, a dominant frequency energy proportion) of the target exercise data in the target time period.

The wearable device 100 may extract power spectral density of the target exercise data in the target time period through a Fourier transform, and obtain the frequency domain feature of the target exercise data from the power spectral density. Further, the wearable device 100 may perform short-time Fourier transform processing on the target exercise data by using a preset time window, to obtain power spectral density data corresponding to different time windows, and concatenate the power spectral density data to obtain distribution of power spectral density with a frequency. The dominant frequency energy proportion of the exercise data can be obtained from the distribution of the power spectral density with the frequency.

In each preset period, the wearable device may extract a time domain feature of the target exercise data based on peaks included in the target exercise data.

Specifically, the wearable device 100 may calculate a first peak interval between any two adjacent peaks in the peaks included in the target exercise data, determine an effective peak in the target exercise data based on the first peak interval, and use a second peak interval between any two adjacent effective peaks as the time domain feature of the target exercise data. If the first peak interval is greater than or equal to a first preset threshold, the wearable device 100 determines that the former in the any two adjacent peaks is the effective peak. If the first peak interval is less than the first preset threshold, the wearable device 100 may determine that the former in the any two adjacent peaks is an ineffective peak. Therefore, the wearable device 100 may detect an ineffective peak and an effective peak in the target exercise data based on a peak interval, where a peak interval between effective peaks is a data feature of the target exercise data in time domain; and the wearable device 100 records an index (time, a location, a height, and the like) of the ineffective peak.

In each preset period, the wearable device 100 may calculate peak-to-valley values of the peaks included in the target exercise data, where a peak-to-valley value of each peak is a height difference between the peak and a nearest valley after the peak. Then, the wearable device 100 may calculate a ratio between peak-to-valley values of any two adjacent peaks, determine an effective peak in the target exercise data based on the ratio between the peak-to-valley values, and use a peak-to-valley value of the effective peak as the time domain feature of the target exercise data. If the ratio between the peak-to-valley values of the any two adjacent peaks is greater than or equal to the second preset threshold, the wearable device 100 may determine that the former in the any two adjacent peaks is an effective peak. If the ratio between the peak-to-valley values of the any two adjacent peaks is less than the second preset threshold, the wearable device 100 may determine that the former in the any two adjacent peaks is an ineffective peak. Therefore, the wearable device 100 may detect an ineffective peak and an effective peak in the target exercise data based on the peak-to-valley value, where a peak-to-valley value between an effective peak and a valley adjacent to the effective peak is a data feature of the target exercise data in time domain; and the wearable device 100 records an index (time, a location, a height, and the like) of the ineffective peak.

For the ineffective peak detected from the exercise data based on the peak interval and the ineffective peak detected from the exercise data based on the peak-to-valley value, the wearable device 100 may move the detected ineffective peaks to a container, to remove the ineffective peaks from the target exercise data and correct the peaks.

Because the target exercise data includes three-axis acceleration data and three-axis gyroscope data, the wearable device 100 may output a rope jumping quantity of the user by comprehensively considering a quantity of effective peaks in the three-axis acceleration data and a quantity of effective peaks in the three-axis gyroscope data. In a possible implementation, in a rope jumping process of the user, the wearable device 100 may output a rope jumping quantity on the display in real time. In another possible implementation, in a rope jumping process of the user, the wearable device 100 may broadcast a rope jumping quantity of the user through a voice.

To improve reliability of a rope jumping status, the wearable device 100 may separately extract a time domain feature and a frequency domain feature of each-axis data in the three-axis acceleration data and the three-axis gyroscope data. Finally, the wearable device 100 inputs, to the trained decision model, a total of 18 variables including the dominant frequency energy proportion, the peak interval, and the peak-to-valley value of each-axis data. In each preset period, the wearable device 100 may determine a rope jumping status of the user at a target moment by using the decision model.

The target exercise data is data collected by one or more motion sensors in the target time period, and the target moment is an end moment of the target time period. It can be understood that, in each preset period, the target exercise data obtained by the wearable device 100 may be data with a same time length. For example, it is assumed that the preset period is one second and a time length of the target exercise data is 30 seconds. In a 0^{th} preset period, that is, when the wearable device 100 starts to detect a rope jumping status, the target time period is from a 0^{th} second to a 30^{th} second. The wearable device 100 may iteratively calculate a target window width based on exercise data in the 0^{th} second to the 30^{th} second; determine, based on the target window width, peaks included in the exercise data in the 0^{th} second to the 30^{th} second; and output a rope jumping status of the user in the 30 seconds based on the peaks included in the exercise data in the 0^{th} second to the 30^{th} second. In the first preset period, that is, a next second, the target time period is from a 1^{st} second to a 31^{st} second. The wearable device 100 may iteratively calculate a target window width based on exercise data in the 1^{st} second to the 31^{st} second; determine, based on the target window width, peaks included in the exercise data in the 1^{st} second to the 31^{st} second; and output a rope jumping status of the user in the 31 seconds based on the peaks included in the exercise data in the 1^{st} second to the 31^{st} second. The wearable device 100 may determine the rope jumping status of the user every second, and the wearable device 100 may not stop detecting the rope jumping status of the user until the user stops rope jumping.

**The following describes that the wearable device 100 determines a rope jumping status of a user based on a state transition model.**

A state transition equation means that in dynamic planning, a state in a current phase is usually a result of a state in a previous phase and a decision in the previous phase. If a state Sₖ and a decision uk(Sk) in a K^{th} phase are given, a state Sₖ₊₁ in a (K+1)^{th} phase can be determined. A model determined by the state transition equation can be a state transition model.

It can be understood that, in each preset period, the wearable device 100 may input features such as the peak interval, the valley value, and the dominant frequency energy proportion of the target exercise data to the decision model, and output a rope jumping status of the user at the target moment. When the rope jumping status at the target moment is different from a rope jumping status at a previous moment of the target moment, it indicates that the rope jumping status of the user changes. The wearable device 100 may input the rope jumping status at the target moment and a rope jumping status at each moment in a next preset time period of the target moment to the state transition model, and the wearable device 100 may obtain the rope jumping status at the target time based on the state transition equation. An interval between the target moment and the previous moment of the target moment is a preset period. When the rope jumping status at each moment in the next preset time period in the state transition model is the same as the rope jumping status at the target moment, it may indicate that the rope jumping status of the user at the target moment lasts for a period of time and is not a suddenly changed exercise status, and the wearable device 100 may obtain the rope jumping status at the target moment. When a rope jumping status at any moment in the next preset time period in the state transition model is different from the rope jumping status at the target moment, it may indicate that the rope jumping status of the user at the target moment is unstable, and the wearable device 100 uses the rope jumping status at the previous moment of the target moment as the rope jumping status at the target moment.

For example, the decision model outputs a rope jumping status 1 in a first target time period. If the decision model outputs a rope jumping status 2 in a previous target time period of the first target time period, because the rope jumping status 1 is different from the rope jumping status 2, it indicates that the rope jumping status of the user changes. To reduce a rate of misdetermining the rope jumping status, the wearable device 100 may input, to the state transition model, the rope jumping status 1 in the first target time period and a rope jumping status in each target time period (for example, a second target time period, a third target time period, a fourth target time period, and a fifth target time period) in a next preset time period of the first target time period. If the rope jumping status in each target time (for example, the second target time period, the third target time period, the fourth target time period, and the fifth target time period) in the next preset time period is the same as the rope jumping status in the first target time period, that is, both are the rope jumping status 1, the wearable device 100 may consider the rope jumping status 1 as the rope jumping status of the user in the first target time period. If a rope jumping status at any moment (for example, the fourth target time period) in the next preset time period is different from the rope jumping status in the first target time period, the rope jumping status (that is, the rope jumping status 2) in the previous target time period of the first target time period is used as the rope jumping status in the first target time period.

It should be noted that time lengths of all the target time periods are the same, and a time interval between adjacent target time periods is a preset period.

In each preset period, if the wearable device 100 learns, based on the state transition model, that the rope jumping status of the user in the target time period is a rope jumping interruption state, the wearable device 100 may stop recording rope jumping, that is, stop collecting personal exercise data. After collecting exercise data again, the wearable device 100 performs identification processing on the exercise data again. After identifying a rope jumping mode, the wearable device 100 starts to analyze a rope jumping situation of the user.

In each preset period, if the wearable device 100 learns, based on the state transition equation, that the rope jumping status of the user in the target time period is another rope jumping status other than the rope jumping interruption state, the wearable device 100 may continue to output the rope jumping status of the user in each target time period based on the preset period until the user stops rope jumping.

**The wearable device 100 may display parameters of a user, such as a rope jumping status, a rope jumping quantity, a rope jumping frequency, and a heart rate of the user. Rope jumping results of the user such as a rope jumping status, a rope jumping quantity, a rope jumping frequency, and a heart rate of the user may also be displayed in the terminal device 200.**

**The following describes that the wearable device 100 displays rope jumping results of a rope jumping exercise, such as a rope jumping status, a rope jumping quantity, a rope jumping frequency, and a heart rate of a user.**

In some embodiments, when the wearable device 100 obtains exercise data of rope jumping of a user, the wearable device 100 may display, on the display, a rope jumping result of the user in a rope jumping process. In some embodiments, the wearable device 100 may send exercise data of rope jumping of a user to the terminal device 200, and after obtaining a rope jumping result of the user in a rope jumping process through calculation, the terminal device 200 sends the rope jumping result to the wearable device 100. The rope jumping result displayed by the wearable device 100 may be the same as or different from that displayed by the terminal device 200.

The following describes that the wearable device 100 displays a rope jumping result in a rope jumping process.

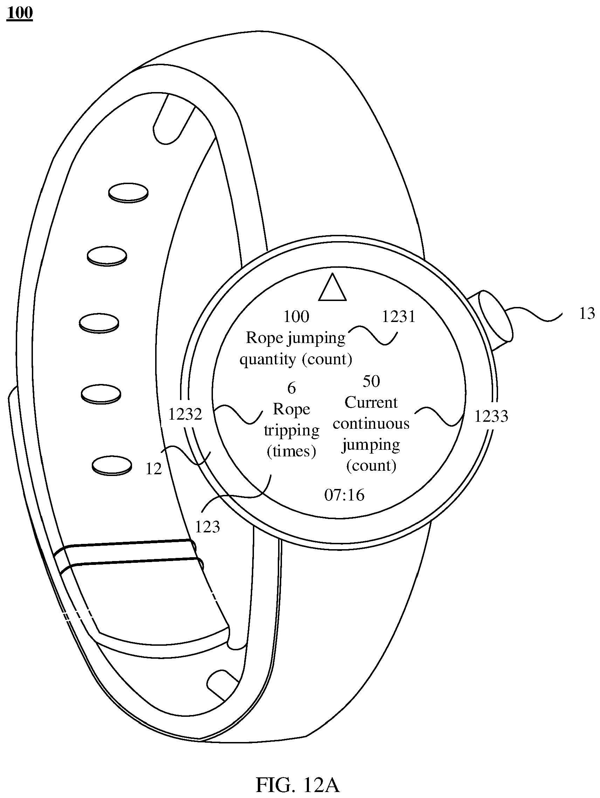

It can be understood that, the wearable device 100 may display a rope jumping quantity, a rope tripping quantity, and a current continuous jumping quantity of a user in a rope jumping process of the user in real time. FIG. 12A shows an interface 123 in which the wearable device 100 displays a rope jumping result in a rope jumping process. It can be learned from FIG. 12A that, the rope jumping result interface 123 may include an identifier 1231 of a current rope jumping quantity 100, an identifier 1232 of a current rope tripping quantity 6, and an identifier 1233 of a current continuous jumping quantity 50.

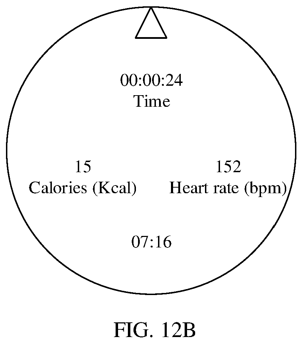

Further, the rope jumping result interface 123 may alternatively display more or less content. For example, after the wearable device 100 responds to sliding of the user or the touch control 13 responds to rotation of the user, the interface 123 may further display content shown in FIG. 12B: current rope jumping time (for example, 00:00:24), current consumed calories (for example, 15 Kcal), and a current heart rate of the user (for example, 152 bpm).

Further, if the user sets a remind interval, the wearable device 100 may remind the user in a voice or vibration form when the rope jumping quantity reaches the preset remind interval.

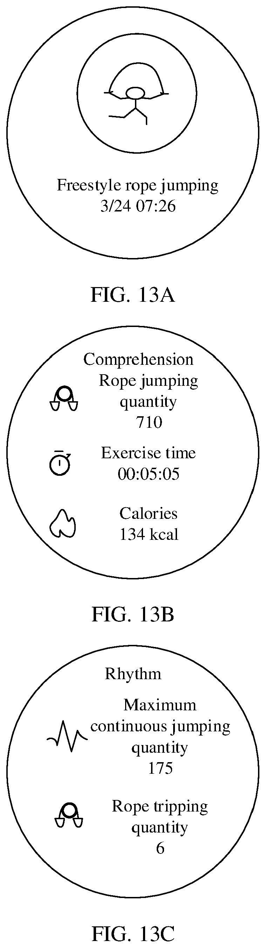

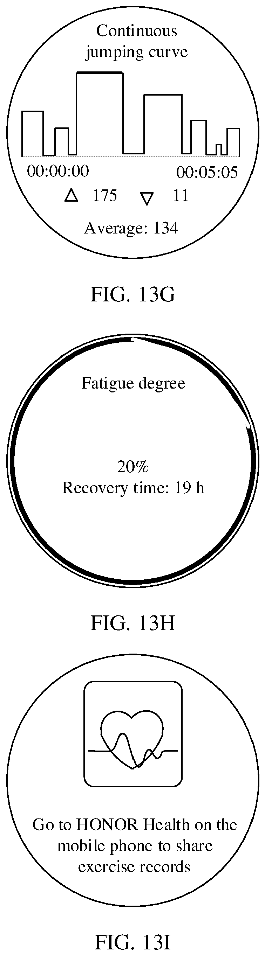

In some embodiments, after the user ends rope jumping, the wearable device 100 may display more rope jumping results about the current rope jumping. An example in which rope jumping is performed for 5 minutes in a freestyle rope jumping mode is used for description. FIG. 13A and FIG. 13I are diagrams of another group of UIs for displaying a rope jumping result by a wearable device according to an embodiment of this application, for example, a diagram of a UI for a rope jumping result after rope jumping ends.

In FIG. 13A, freestyle rope jumping, that is, a rope jumping mode of 5-minute rope jumping, is recorded, and time at which the user ends rope jumping is recorded, for example, 07:26 on March 24.

In FIG. 13B, a comprehensive result of 5-minute rope jumping is recorded. For example, a rope jumping quantity is 710, exercise time is 00:05:005, and consumed calories are 134 kcal.

In FIG. 13C, a rhythm of 5-minute rope jumping is recorded. For example, in 5-minute rope jumping, a maximum continuous jumping quantity is 175, and a rope tripping quantity is 6.

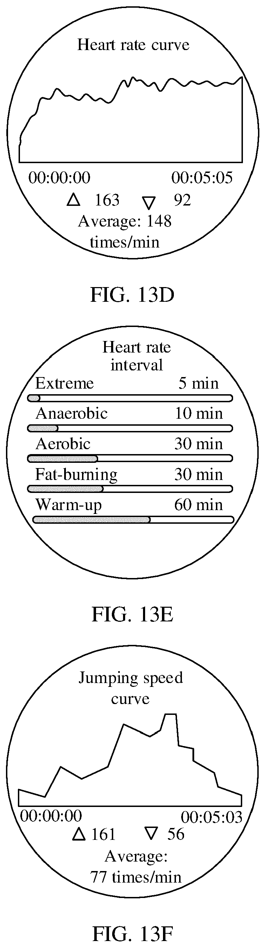

In FIG. 13D, a heart rate curve of 5-minute rope jumping is recorded. For example, in the 5-minute rope jumping process, a maximum heart rate may be 163 times/minute, a minimum heart rate may be 92 times/minute, and an average heart rate may be 148 times/minute.

In FIG. 13E, a heart rate interval of 5-minute rope jumping is recorded. For example, a proportion occupied by 5-minute rope jumping in an extreme heart rate, a proportion occupied by 5-minute rope jumping in an anaerobic heart rate, a proportion occupied by 5-minute rope jumping in an aerobic heart rate, a proportion occupied by 5-minute rope jumping in a fat-burning heart rate, and a proportion occupied by 5-minute rope jumping in a warm-up heart rate.

In FIG. 13F, a rope jumping frequency curve of 5-minute rope jumping is recorded. For example, for a rope jumping frequency of the user in the 5-minute rope jumping process, a maximum rope jumping frequency may be 161 times/minute, a minimum rope jumping frequency may be 56 times/minute, and an average rope jumping frequency may be 77 times/minute.

In FIG. 13G, a continuous jumping curve of 5-minute rope jumping is recorded. For example, for a continuous jumping quantity of the user in the 5-minute rope jumping process, a maximum continuous jumping quantity may be 175, a minimum continuous jumping quantity may be 11, and an average continuous jumping quantity may be 134.

In FIG. 13H, a fatigue degree of 5-minute rope jumping of the user is recorded. For example, the fatigue degree of the user after 5-minute rope jumping may be 20%, and recovery time may be 19 hours.

In FIG. 13I, it is recorded that the wearable device 100 may send data of 5-minute rope jumping to the terminal device 200 (for example, a mobile phone). Because an area of the display 12 of the wearable device 100 is limited, a display form of the rope jumping result displayed by the wearable device 100 is also limited. Therefore, more rope jumping results and recommendations may be displayed in the terminal device 200 that establishes a connection to the wearable device 100. Further, in response to an operation performed on a parameter bar "maximum continuous jumping quantity" or a parameter bar "rope tripping quantity" shown in FIG. 13C, the wearable device 100 may jump to a schematic diagram of the continuous jumping curve shown in FIG. 13G.

**The following describes that the terminal device 200 displays rope jumping results of a rope jumping exercise, such as a rope jumping status, a rope jumping quantity, a rope jumping frequency, and a heart rate of a user.**

It can be understood that, if the wearable device 100 is connected to the terminal device 200, the wearable device 100 may transmit rope jumping results such as a rope jumping status, a rope jumping quantity, a rope jumping frequency, and a heart rate of a user to the terminal device 200 in real time.

If the wearable device 100 is disconnected from the terminal device 200, the wearable device 100 may first store, in a memory such as a flash, exercise results such as a rope jumping status, a rope jumping quantity, a rope jumping frequency, and a heart rate of the user. When the wearable device 100 is connected to the terminal device 200, the wearable device 100 transmits, to the terminal device 200, the rope jumping results such as the rope jumping status, the rope jumping quantity, the rope jumping quantity, the rope jumping status, the rope jumping quantity, the rope jumping frequency, and the heart rate of the user.

The terminal device 200 may receive and store the rope jumping results from the wearable device 100, such as the rope jumping quantity, the rope jumping status, the rope jumping quantity, the rope jumping frequency, and the heart rate of the user. In a possible implementation, the terminal device 200 may display one or more of the foregoing rope jumping results.

In another possible implementation, the terminal device 200 may receive rope jumping data of a user in a rope jumping process from the wearable device 100, and then the terminal device 200 may calculate a rope jumping result of the user in the rope jumping process based on the rope jumping data, and send the rope jumping result to the wearable device 100.

It can be understood that, the rope jumping result displayed by the terminal device 200 may be the same as or different from the rope jumping result displayed by the wearable device 100.

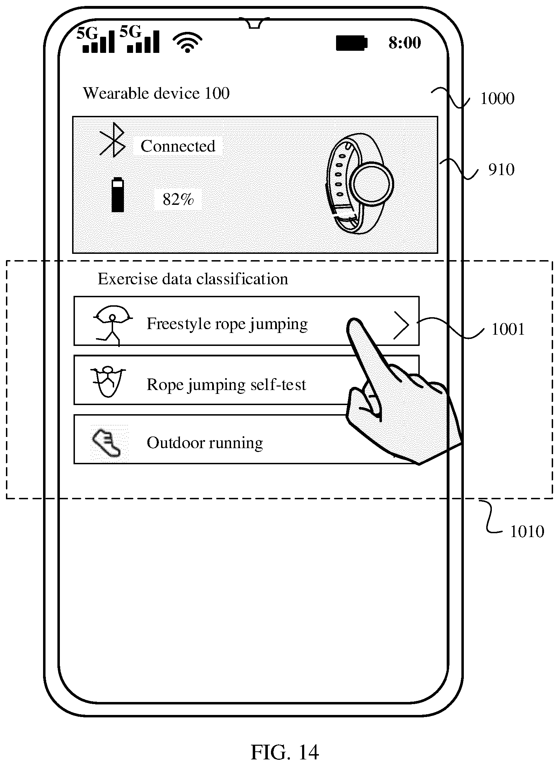

The terminal device 200 may display an application interface 1000 shown in FIG. 14. The application interface 1000 may include a status bar 310, a device status bar 910, and an exercise data bar 1010 corresponding to an exercise mode.

The exercise data bar 1010 corresponding to the exercise mode may include a freestyle rope jumping data option 1001, a rope jumping self-test data option, and an outdoor running data option. That the terminal device 200 displays a rope jumping result is described by using 10-minute freestyle rope jumping as an example.

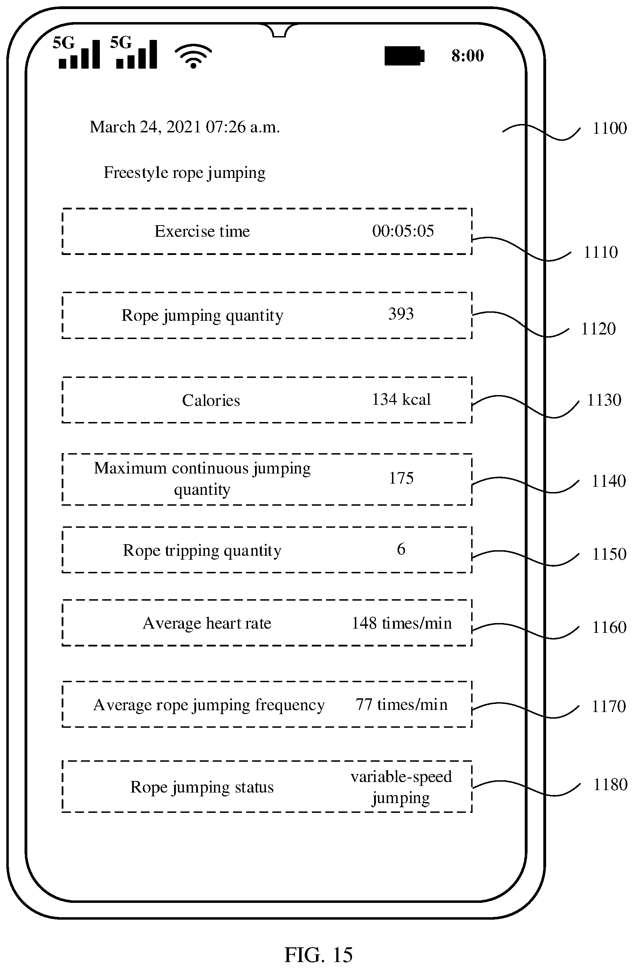

In response to a user operation (for example, a tap) perform on the freestyle rope jumping data option 1001, the terminal device 200 may display a freestyle rope jumping interface 1100 shown in FIG. 15. The freestyle rope jumping interface 1100 may include an exercise time parameter bar 1110, a rope jumping quantity parameter bar 1120, a calorie parameter bar 1130, a maximum continuous jumping parameter bar 1140, a rope tripping quantity parameter bar 1150, an average heart rate parameter bar 1160, an average rope jumping frequency parameter bar 1170, and a rope jumping status parameter bar 1180.

The exercise time parameter bar 1110 may include exercise time (for example, 5 minutes) of a user. The rope jumping quantity parameter bar 1120 may include a rope jumping quantity (for example, 710) of a user in exercise time (for example, 5 minutes). The calorie parameter bar 1130 may include calories (for example, 134 kcal) consumed by a user in exercise time (for example, 5 minutes).

The maximum continuous jumping parameter bar 1140 may include a maximum continuous jumping quantity (for example, 175) of a user in exercise time (for example, 5 minutes).

The rope tripping quantity reference bar 1150 may include a rope tripping quantity (for example, 6) of a user occurred in exercise time (for example, 5 minutes).

The average heart rate parameter bar 1160 may include a comment heart rate (for example, 148 times/minute) of a user in exercise time (for example, 5 minutes).

The average rope jumping frequency parameter bar 1170 may include an average rope jumping frequency (for example, 150) of a user in exercise time (for example, 5 minutes).

The terminal device 200 may further display detailed information such as a maximum heart rate, a minimum heart rate, a maximum rope jumping frequency, and a minimum rope jumping frequency.

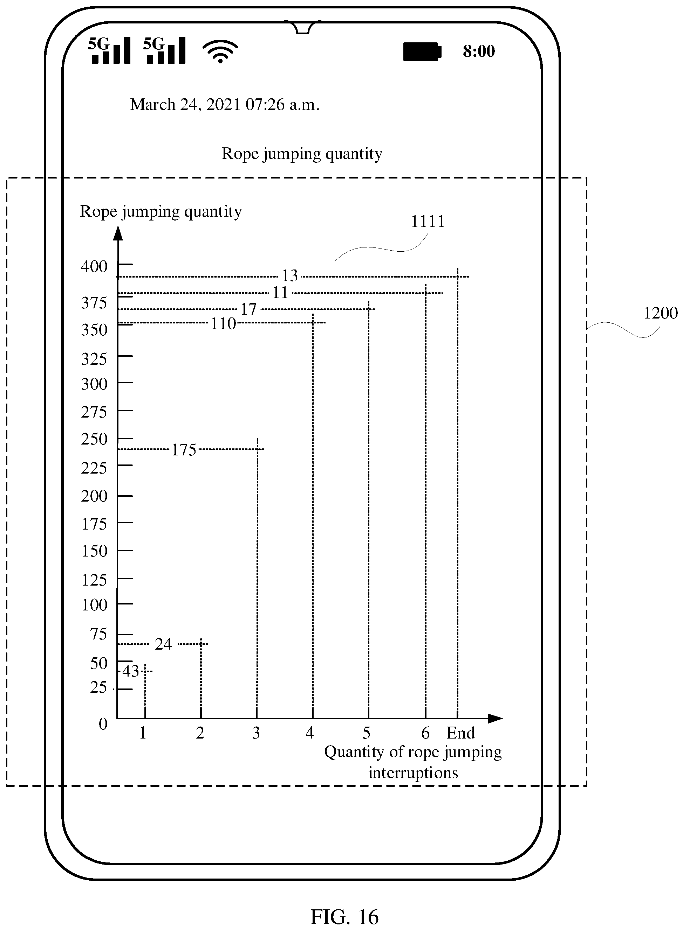

In response to a user operation (for example, a tap) performed on the rope jumping quantity reference bar 1120 shown in FIG. 15, or in response to a user operation (for example, a slide) performed on the display, the terminal device 200 may display a rope jumping quantity interface 1200 shown in FIG. 16. The rope jumping quantity interface 1200 may include a rope jumping quantity curve 1111.

In the rope jumping quantity curve 1111, the terminal device 200 displays, in a bar chart manner, a quantity of times of rope jumping continuously performed by the user before a rope jumping interruption state occurs, where a horizontal coordinate is a quantity of rope jumping interruptions, and a vertical coordinate is a rope jumping quantity.

It can be learned from the rope jumping quantity curve 1111 shown in FIG. 16 that, in a process in which the user completes 393 times of rope jumping, a total of six rope jumping interruptions occur. A first rope jumping interruption occurs after the user continuously performs 43 times of rope jumping, a second rope jumping interruption occurs after the user continuously performs 24 times of rope jumping, a third rope jumping interruption occurs after the user continuously performs 175 times of rope jumping, a fourth rope jumping interruption occurs after the user continuously performs 110 times of rope jumping, a fifth rope jumping interruption occurs after the user continuously performs 17 times of rope jumping, and a sixth rope jumping interruption occurs after the user continuously performs 11 times of rope jumping. The user stops rope jumping after continuously performs 13 times of rope jumping. The terminal device 200 may mark, in a bar chart, occurrence of a rope jumping interruption by using an iconic symbol (for example, a straight line, a triangle, a circle, a cross, or another special symbol). It can be learned that, the rope jumping quantity curve 1111 shown in FIG. 16 marks occurrence of a rope jumping interruption in a form of a straight line. In this way, the user can intuitively learn, through the bar chart, of a quantity of times of rope jumping continuously performed by the user before a rope jumping interruption occurs.

In a possible implementation, in response to an operation performed on any straight line in the rope jumping quantity curve 1111 (for example, a straight line corresponding to the sixth rope jumping interruption), the terminal device 200 may display more details, for example, may display, above the straight line corresponding to the sixth rope jumping interruption, time at which the sixth rope jumping interruption occurs, a heart rate of the user at this time, and the like.

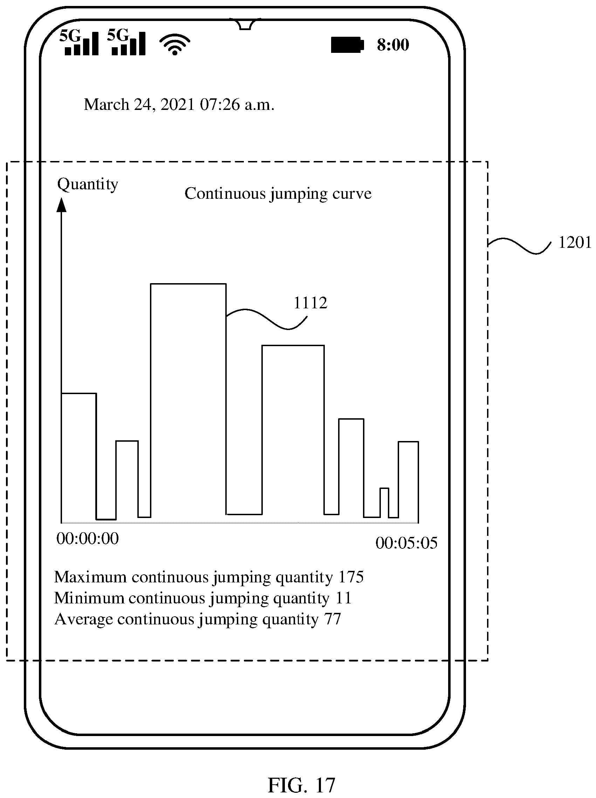

In response to a user operation (for example, a tap) performed on the rope jumping quantity parameter bar 1120 shown in FIG. 15, or in response to a user operation (for example, a slide) performed on the display, the terminal device 200 may display a continuous jumping curve interface 1201 shown in FIG. 17. The continuous jumping curve interface 1201 may include a continuous jumping curve 1112.

In the continuous jumping curve 1112, the terminal device 200 displays, in a column chart manner, a quantity of times of rope jumping continuously performed by the user before rope tripping occurs, where a horizontal coordinate is rope jumping time, and a vertical coordinate is a rope jumping quantity.

It can be learned from the continuous jumping curve 1112 shown in FIG. 17 that, a maximum continuous jumping quantity of the user in 5-minute rope jumping is 175, a minimum continuous jumping quantity is 11, and an average continuous jumping quantity is 77. When a rope tripping phenomenon occurs, a rope jumping quantity of the user is 0. Therefore, it may be considered that rope tripping occurs when there is no rope jumping quantity between adjacent times of continuous jumping. It can be learned from the continuous jumping quantity curve that, the user has six times of rope tripping.

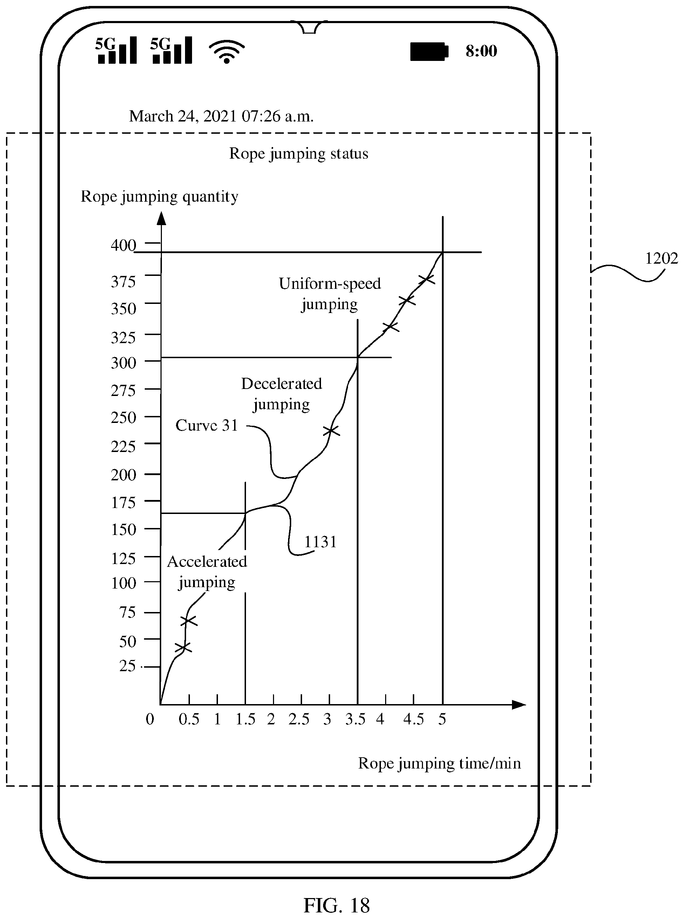

In a possible implementation, in response to an operation performed on any column in the continuous jumping curve 1112, the terminal device 200 may display more details, for example, a continuous jumping quantity corresponding to each column, time at which a rope jumping interruption occurs, and a current heart rate of the user corresponding to the continuous jumping. In response to a user operation (for example, a tap) performed on the rope jumping status parameter bar 1180 shown in FIG. 15, or in response to a user operation (for example, a slide) performed on the display shown in FIG. 15, the terminal device 200 may display a rope jumping status interface 1202 shown in FIG. 18. The rope jumping status interface 1202 may include a rope jumping status curve 1131.

In the rope jumping status interface 1202, the terminal device 200 displays, in a manner of the rope jumping status curve 1131, each rope jumping status of the user in a rope jumping process, where a horizontal coordinate is a rope jumping quantity, and a vertical coordinate is a rope jumping status.

It can be learned from the rope jumping status interface 1202 shown in FIG. 18 that, in 5-minute rope jumping duration, the user is in an accelerated jumping state in the first two minutes, in a decelerated jumping state from a second minute to a fourth minute, and in a uniform-speed jumping state from the fourth minute to a fifth minute.

In an accelerated jumping process, the user has a rope jumping interruption when the rope jumping time is 36 seconds, and the user has a rope jumping interruption when the rope jumping time is 48 seconds.

During a transition from the accelerated jumping state to the decelerated jumping state, the user has a rope jumping interruption when the rope jumping time is 3 minutes 30 seconds.

During a transition from the decelerated jumping state to the uniform-speed jumping state, in a uniform-speed jumping process, the user has a rope jumping interruption when the rope jumping time is 4 minutes and 10 seconds, the user has a rope jumping interruption when the rope jumping time is 4 minutes and 25 seconds, and the user has a rope jumping interruption when the rope jumping time is 4 minutes and 40 seconds.

The terminal device 200 may mark, in the rope jumping status curve 1131 by using an iconic symbol (for example, a straight line, a triangle, a circle, a cross, or another special symbol), a time point at which a rope jumping interruption occurs. In this way, the user can more intuitively learn, by using the rope jumping status curve 1131, of rope jumping interruption time and quantities of rope jumping interruptions when the user is in different rope jumping statuses.

In a possible implementation, in response to an operation performed on any curve in the rope jumping status curve 1131 (for example, a curve corresponding to accelerated jumping), the terminal device 200 may display more details, for example, may display, above the curve corresponding to accelerated jumping, time at which a rope jumping interruption occurs in the accelerated jumping process, a heart rate of the user at this time, and the like.

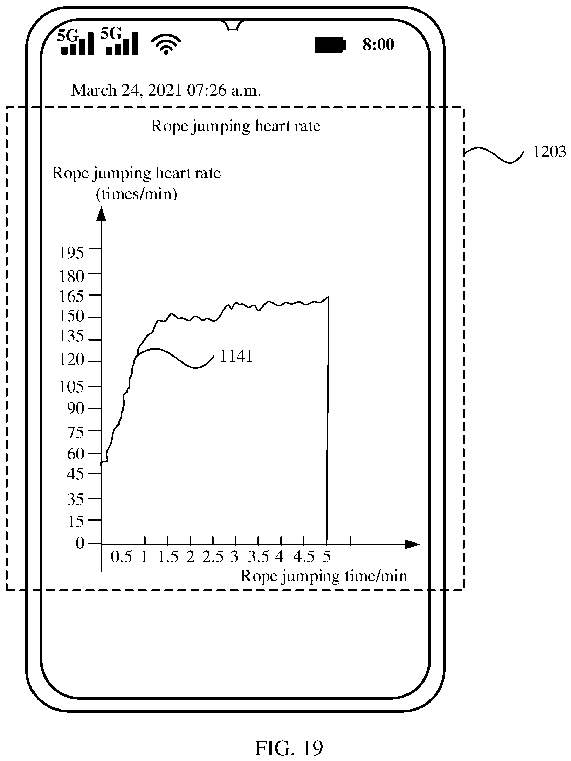

In response to a user operation (for example, a tap) performed on the average heart rate reference bar 1160 shown in FIG. 15, or in response to a user operation (for example, a slide) performed on the display shown in FIG. 15, the terminal device 200 may display a rope jumping heart rate interface 1203 shown in FIG. 19. The rope jumping heart rate interface 1203 may include a rope jumping heart rate curve 1141.

In the rope jumping heart rate interface 1203, the terminal device 200 displays, in a manner of the rope jumping heart rate curve, a change in a heart rate of the user with time in a rope jumping process of the user, where a horizontal coordinate is rope jumping time, and a vertical coordinate is a rope jumping heart rate.

From the rope jumping heart rate curve 1141 shown in FIG. 19, a heart rate of the user corresponding to each exercise time point in a rope jumping process in 5-minute rope jumping duration can be learned of, for example, rope jumping time (2 minutes and 41 seconds) corresponding to a maximum heart rate (for example, 1631 times/minute), and a minimum heart rate (for example, 92 times/minute). It can be understood that, in the 5-minute rope jumping duration, the user may have a plurality of maximum heart rates and a plurality of minimum heart rates, which are not listed one by one herein for description.

In a possible implementation, in response to an operation performed on any curve in the rope jumping heart rate curve 1141, the terminal device 200 may display more details, for example, may display, above the rope jumping heart rate curve 1141, rope jumping time at which the heart rate occurs, and the like.

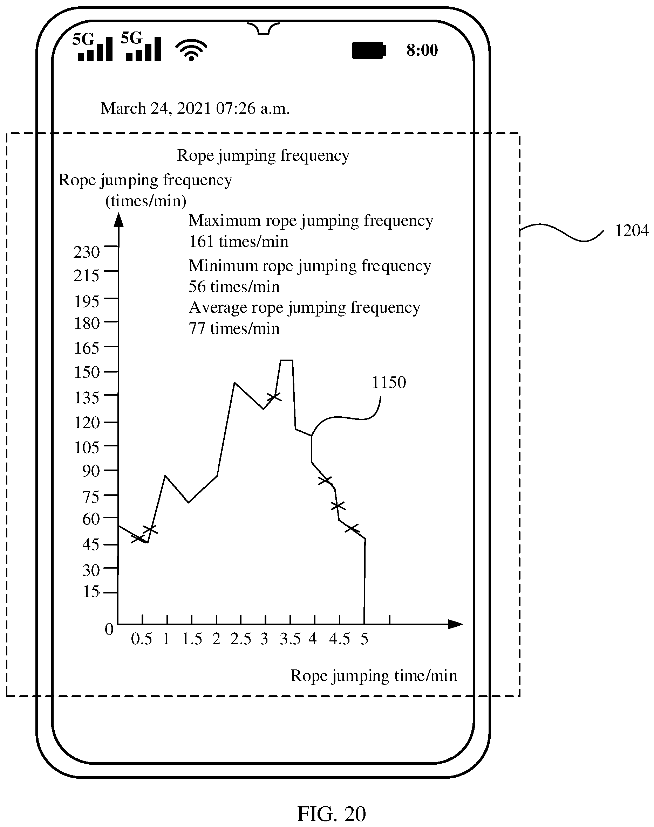

In response to a user operation (for example, a tap) performed on the average rope jumping frequency reference bar 1170 shown in FIG. 15, or in response to a user operation (for example, a slide) performed on the display shown in FIG. 15, the terminal device 200 may display a rope jumping frequency interface 1204 shown in FIG. 20. The rope jumping frequency interface 1204 may include a rope jumping frequency curve 1150.

In the rope jumping frequency interface 1204, the terminal device 200 displays, in a manner of the rope jumping frequency curve 1150, a change in a rope jumping frequency of the user with time in a rope jumping process of the user, where a horizontal coordinate is rope jumping time, and a vertical coordinate is a rope jumping frequency.

From the rope jumping frequency curve 1150 shown in FIG. 20, a rope jumping frequency of the user corresponding to each exercise time point in a rope jumping process in 5-minute rope jumping duration can be learned of, for example, rope jumping time (for example, approximately 3 minutes and 30 seconds) corresponding to a maximum rope jumping frequency (for example, 161 times/minute), and rope jumping time (for example, approximately 30 seconds) corresponding to a minimum rope jumping frequency (for example, 56 times/minute). It can be understood that, in the 5-minute rope jumping duration, the user may perform rope jumping at frequencies other than the maximum rope jumping frequency and the minimum rope jumping frequency, which are not listed one by one herein for description.

The terminal device 200 may mark, in the rope jumping frequency curve 1150 by using an iconic symbol (for example, a straight line, a triangle, a circle, a cross, or another special symbol), a time point at which a rope jumping interruption occurs. In this way, the user can more intuitively learn of rope jumping interruption time and a quantity of rope jumping interruptions by using the rope jumping frequency curve 1150. For example, the user has a rope jumping interruption when the rope jumping time is approximately 36 seconds, the user has a rope jumping interruption when the rope jumping time is approximately 48 seconds, the user has a rope jumping interruption when the rope jumping time is approximately 3 minutes and 30 seconds, the user has a rope jumping interruption when the rope jumping time is approximately 4 minutes and 10 seconds, the user has a rope jumping interruption when the rope jumping time is approximately 4 minutes and 25 seconds, and the user has a rope jumping interruption when the rope jumping time is approximately 4 minutes and 40 seconds.

Further, in response to a user operation (for example, a tap) performed on the rope tripping quantity reference bar 1150 shown in FIG. 15, the terminal device 200 may jump to an interface displaying a quantity of rope jumping interruptions. For example, the terminal device 200 may jump to the rope jumping quantity interface 1200 shown in FIG. 16, or the terminal device 200 may jump to the continuous jumping curve interface 1201 shown in FIG. 17, or the terminal device 200 may jump to the rope jumping status interface 1202 shown in FIG. 18, or the terminal device 200 may jump to the rope jumping frequency interface 1204 shown in FIG. 20.

It can be understood that, the wearable device 100 and the terminal device 200 mentioned above are representation forms of the electronic device.

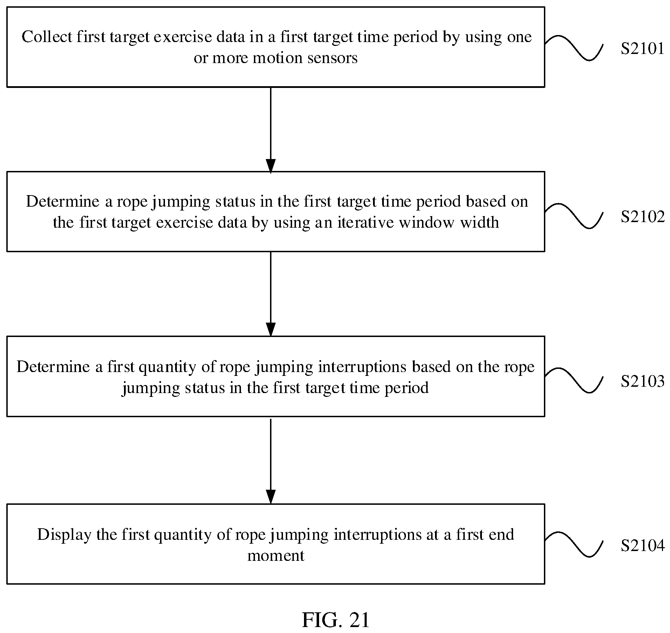

**FIG. 21** **is a schematic flowchart of a rope jumping status detection method.** The method may include the following steps.

Step S2101: An electronic device collects first target exercise data in a first target time period by using one or more motion sensors.

Specifically, the electronic device is worn on a wrist of a user. When an action of the wrist changes, the motion sensor may sense the action of the wrist, to collect real-time data of the wrist. The motion sensor may include an acceleration sensor, a gyroscope sensor, a sound collector, and the like. When a wearable device is in a working state, in the first target time period, an acceleration sensor in the wearable device may collect acceleration data of the wrist, a gyroscope sensor may collect gyroscope data of the wrist, and a sound collector may collect sound data in an environment in which the user is located.

Step S2102: The electronic device determines a rope jumping status in the first target time period based on the first target exercise data by using an iterative window width.

Specifically, in the first target time period, a process in which the electronic device iteratively calculates the iterative window width based on the first target exercise data includes the following steps.

Step 1: The electronic device obtains a preset window width d₀ or a window width dᵢ₋₁ obtained in previous iterative calculation, where the preset window width may be manually set based on experience and built into the electronic device. It can be understood that, when the electronic device iteratively calculates a window width for the first time, the window width obtained by the electronic device is the preset window width. When the electronic device does not iteratively calculate the window width for the first time, the electronic device may obtain the window width obtained in previous iterative calculation, where i is a current iteration quantity.

Step 2: The electronic device may perform, based on the preset window width d₀ or the window width dᵢ₋₁ obtained in previous iterative calculation, peak searching on the first target exercise data collected by the one or more motion sensors in the first target time period, to obtain a preset peak quantity Nᵢ. It can be understood that, the first target time period is a time period related to a current preset period. For example, it is assumed that the preset period is one second and a time length t of the target time period is 30 seconds. In a 0^{th} preset period, that is, when the electronic device starts to detect a rope jumping status of the user, the first target time period may be from a 0^{th} second to a 30^{th} second. In a T^{th} preset period, a T^{th} target time period may be from a T^{th} second to a (30+T)^{th} second. The time length t of the target time period may be set based on an actual situation, and is not limited in this embodiment of this application.

Step 3: The electronic device may obtain a reference window width Dᵢ of the first target exercise data based on the preset peak quantity Nᵢ, to be specific, Dᵢ=1/fᵢ, and fᵢ=Nᵢ/t.

Step 4: The electronic device may perform peak searching on the first target exercise data again based on the reference window width Dᵢ, to obtain a reference peak quantity N^ᵢ.

Step 5: The electronic device may determine the iterative window width based on the preset peak quantity and the reference peak quantity.

Specifically, the electronic device may obtain a preset rope jumping frequency fᵢ=Nᵢ/t of the first target exercise data based on the preset peak quantity and the time length t of the target time period. The electronic device may obtain a reference rope jumping frequency f^ᵢ=N^ᵢ/t of the first target exercise data based on the reference peak quantity N^ᵢ and the time length t of the first target time period.

The electronic device may calculate an absolute value |fᵢ-f^ᵢ| of a difference between the preset rope jumping frequency fᵢ and the reference rope jumping frequency f^ᵢ. If the absolute value of the difference is less than a reference threshold, the iterative calculation ends, and it is determined that the iterative window width in the first target time period is dᵢ. If the absolute value of the difference is greater than or equal to the reference threshold, step 6 is performed. It is easy to understand that a case of "equal to" may alternatively be placed in another branch. For example, if the absolute value of the difference is less than or equal to the reference threshold, the iterative calculation ends, and it is determined that the iterative window width in the first target time period is dᵢ.

Step 6: The electronic device updates the iterative window width based on the preset window width dᵢ and the reference window width Dᵢ, where an updated iterative window width is dᵢ₊₁=(dᵢ+Dᵢ)/2. If the current iteration quantity i is less than a preset iteration quantity, the electronic device jumps to step 2, and performs an (i+1)^{th} iterative calculation based on the updated window width. If the iteration quantity i is greater than or equal to the preset iteration quantity, it is determined that the iterative window width in the first target time period is (dᵢ+Dᵢ)/2. It is easy to understand that a case of "equal to" may alternatively be placed in another branch. For example, if the iteration quantity is less than or equal to the preset iteration quantity, the electronic device jumps to step 2, and performs an (i+1)^{th} iterative calculation based on the iteratively updated window width.

Next, the electronic device may determine, by using the iterative window width, peaks included in the first target exercise data.

Specifically, in the first target time period, after determining the iterative window width, the electronic device may perform peak searching on the first target exercise data based on the iterative window width, to obtain a peak quantity, a peak location, and a peak height. The peak searching may be specifically searching for local maximums of the first target exercise data in a target window width. Further, the electronic device may detect a peak point of the first target exercise data based on the target window width by using a peak detection algorithm. The peak detection algorithm may be a Hough-based peak detection algorithm. The peak location is used to indicate location information of a moment at which a peak is located, and the peak height is used to indicate height information of a moment at which a peak is located.

Then, the electronic device may determine the rope jumping status in the first target time period based on the peaks included in the first target exercise data.

Specifically, in the first target time period, the electronic device may extract a frequency domain feature (for example, a dominant frequency energy proportion) of the first target exercise data in the first target time period.

The electronic device may extract power spectral density of the first target exercise data in the first target time period through a Fourier transform, and obtain the frequency domain feature of the first target exercise data from the power spectral density. Further, the electronic device may perform short-time Fourier transform processing on the target exercise data by using a preset time window, to obtain power spectral density data corresponding to different time windows, and concatenate the power spectral density data to obtain distribution of power spectral density with a frequency. The dominant frequency energy proportion in the first target time period may be obtained from the distribution of the power spectral density with the frequency.

In the first target time period, the electronic device may extract a time domain feature in the first target time period based on the peaks included in the first target exercise data.

The electronic device may calculate a first peak interval between any two adjacent peaks in the peaks included in the first target exercise data, determine an effective peak in the first target exercise data based on the first peak interval, and use a second peak interval between any two adjacent effective peaks as the time domain feature in the first target time period. If the first peak interval is greater than or equal to a first preset threshold, the electronic device determines that the former in the any two adjacent peaks is the effective peak. If the first peak interval is less than the first preset threshold, the electronic device may determine that the former in the any two adjacent peaks is an ineffective peak. Therefore, the electronic device may detect an ineffective peak and an effective peak in the first target exercise data based on a peak interval, where the peak interval between effective peaks is a data feature of the first target exercise data in time domain; and the electronic device records an index (time, a location, a height, and the like) of the ineffective peak. In the first target time period, the electronic device may calculate peak-to-valley values of the peaks included in the first target exercise data, where a peak-to-valley value of each peak is a height difference between the peak and a nearest valley after the peak. Then, the electronic device may calculate a ratio between peak-to-valley values of any two adjacent peaks, determine an effective peak in the first target exercise data based on the ratio between the peak-to-valley values, and use a peak-to-valley value of the effective peak as the time domain feature in the first target time period. If the ratio between the peak-to-valley values of the any two adjacent peaks is greater than or equal to the second preset threshold, the electronic device may determine that the former in the any two adjacent peaks is the effective peak. If the ratio between the peak-to-valley values of the any two adjacent peaks is less than the second preset threshold, the electronic device may determine that the former in the any two adjacent peaks is an ineffective peak. Therefore, the electronic device may detect an ineffective peak and an effective peak in the target exercise data based on the peak-to-valley value, where a peak-to-valley value between an effective peak and a valley adjacent to the effective peak is a data feature of the target exercise data in time domain; and the electronic device records an index (time, a location, a height, and the like) of the ineffective peak.

For the ineffective peak detected from the exercise data based on the peak interval and the ineffective peak detected from the exercise data based on the peak-to-valley value, the electronic device may move the detected ineffective peaks to a container, to remove the ineffective peak from the first target exercise data and correct the peaks.

Because the first target exercise data includes three-axis acceleration data and three-axis gyroscope data, the electronic device may output a rope jumping quantity of the user by comprehensively considering a quantity of effective peaks in the three-axis acceleration data and a quantity of effective peaks in the three-axis gyroscope data. **In** a possible implementation, in a rope jumping process of the user, the electronic device may output a rope jumping quantity on the display in real time. **In** another possible implementation, in a rope jumping process of the user, the electronic device may broadcast a rope jumping quantity of the user through a voice.

To improve reliability of a rope jumping status, the electronic device may separately extract a time domain feature and a frequency domain feature of each-axis data in the three-axis acceleration data and the three-axis gyroscope data. Finally, the electronic device inputs, to a trained decision model, a total of 18 variables including the dominant frequency energy proportion, the peak interval, and the peak-to-valley value of each-axis data. In each preset period, the electronic device may determine a rope jumping status of the user in the first target time period by using the decision model. The rope jumping status includes a rope jumping interruption state, a uniform-speed jumping state, an accelerated jumping state, an accelerated jumping state, a variable-speed jumping state, and the like.

The target exercise data is data collected by one or more motion sensors in the target time period, and an end moment is used to identify an end moment of the target time period. It can be understood that, in each preset period, the target exercise data obtained by the electronic device may be data with a same time length. For example, it is assumed that the preset period is one second and a time length of the target time period is 30 seconds. In a 0^{th} target time period, that is, when the electronic device starts to detect a rope jumping status, the 0^{th} target time period is from a 0^{th} second to a 30^{th} second. The electronic device may iteratively calculate an iterative window width based on exercise data in the 0^{th} second to the 30^{th} second; determine, based on the iterative window width, peaks included in the exercise data in the 0^{th} second to the 30^{th} second; and output a rope jumping status of the user in the 0^{th} target time period based on the peaks included in the exercise data in the 0^{th} second to the 30^{th} second. In the first target time period, that is, a next second, the first target time period is from a 1^{st} second to a 31^{st} second. The electronic device may iteratively calculate a target window width based on exercise data in the 1^{st} second to the 31^{st} second; determine, based on the target window width, peaks included in the exercise data in the 1^{st} second to the 31^{st} second; and output a rope jumping status of the user in the 31 seconds based on the peaks included in the exercise data in the 1^{st} second to the 31^{st} second. The electronic device may determine the rope jumping status of the user every second, and the electronic device may not stop detecting the rope jumping status of the user until the user stops rope jumping.

It can be understood that, in each target time period, the electronic device may input features such as the peak interval, the valley value, and the dominant frequency energy proportion of the target exercise data to the decision model, and output the rope jumping status of the user in the target time period. For example, when the rope jumping status in the first target time period is different from a rope jumping status in a previous target time period of the first target time period, it indicates that the rope jumping status of the user changes. The electronic device may input the rope jumping status in the first target time period and a rope jumping status in each time period in a next preset time period of the first target time period to a state transition model; and the electronic device may obtain the rope jumping status in the first target time period based on the state transition equation. When the rope jumping status in each target time period in the next preset time period in the state transition model is the same as the rope jumping status in the first target time period, it may indicate that the rope jumping status of the user in the first target time period lasts for a period of time and is not a suddenly changed exercise status, and the electronic device may obtain the rope jumping status in the first target time period. When a rope jumping status in any time period in the next preset time period in the state transition model is different from the rope jumping status in the first target time period, it may indicate that the rope jumping status in the first target time period is unstable, and the electronic device uses the rope jumping status in the previous target time period of the first target time period as the rope jumping status at a target moment.

If the electronic device learns, based on the state transition model, that the rope jumping status of the user in the first target time period is a rope jumping interruption state, the electronic device may stop recording rope jumping, that is, stop collecting personal exercise data. After collecting exercise data again, the electronic device performs identification processing on the exercise data again. After identifying a rope jumping mode, the electronic device starts to analyze a rope jumping situation of the user.

If the electronic device learns, based on the state transition equation, that the rope jumping status of the user in the first target time period is another rope jumping status other than the rope jumping interruption state, the electronic device may continue to output the rope jumping status of the user in each target time period based on the preset period, until exercise data obtained when the user stops rope jumping is processed.

Step S2103: The electronic device determines a first quantity of rope jumping interruptions based on the rope jumping status in the first target time period.

Specifically, the rope jumping status may include a rope jumping interruption state, and the rope jumping interruption state indicates a state occurred when rope jumping of the user is interrupted. Therefore, in a rope jumping process of the user, the electronic device may determine the first quantity of rope jumping interruptions based on a rope jumping interruption apparatus in the first target time period.

Step S2104: The electronic device displays the first quantity of rope jumping interruptions at a first end moment.

Specifically, the first target time period may include the first end moment, and the first end moment is used to identify an end moment of the first target time period. After the electronic device determines, based on the first target data, that the rope jumping status in the first target time period includes the rope jumping interruption state, the electronic device may display the first quantity of rope jumping interruptions at the first end moment. In other words, in a rope jumping process of the user, the electronic device may display a quantity of rope jumping interruptions of the user on the display in real time.

It can be understood that, the electronic device may display, on the display, exercise results of rope jumping of the user, for example, a rope jumping quantity, a quantity of rope jumping interruptions, a rope jumping status, and a rope jumping heart rate.

If the electronic device (for example, the wearable device 100) is connected to the terminal device 200, the electronic device (for example, the wearable device 100) may transmit exercises such as a rope jumping status, a rope jumping quantity, a rope jumping frequency, and a heart rate of the user to the terminal device 200 in real time.

If the electronic device (for example, the wearable device 100) is disconnected from the terminal device 200, the electronic device (for example, the wearable device 100) may first store, in a memory such as a flash, exercise results such as a rope jumping status, a rope jumping quantity, a rope jumping frequency, and a heart rate of the user. When the electronic device (for example, the wearable device 100) is connected to the terminal device 200, the electronic device transmits, to the terminal device 200, the exercise results such as the rope jumping status, the rope jumping quantity, the rope jumping quantity, the rope jumping status, the rope jumping quantity, the rope jumping frequency, and the heart rate of the user. The terminal device 200 may display rope jumping data of a rope jumping exercise.

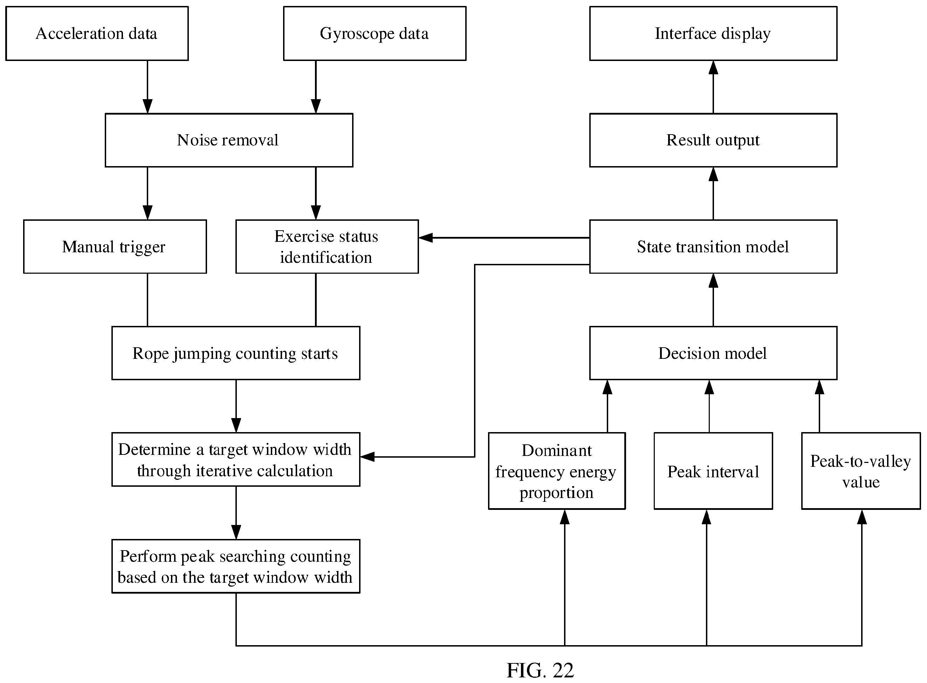

**FIG. 22** **is a schematic flowchart of another rope jumping exercise detection method.** It can be learned from FIG. 22 that, an electronic device is worn on a wrist of a user, an acceleration sensor in the electronic device collects acceleration data of the wrist, and a gyroscope sensor collects gyroscope data of the wrist. Further, the electronic device may collect the acceleration data and the gyroscope data at a preset sampling frequency (for example, 100 Hz), and report an exercise data packet every preset time (for example, 100 ms), where each exercise data packet includes 10 groups of acceleration data and gyroscope data.

It is easy to understand that a normal range of a rope jumping exercise is usually from 30 times/minute to 300 times/minute, that is, a rope jumping frequency covers 0.5 Hz to 5 Hz. Therefore, noise data may exist in the collected data, and the electronic device may filter out high and low frequency noise by using a band-pass filter.

The electronic device may receive input from the user to enable a rope jumping mode; or may determine, based on data collected by a sensor, to enable the foregoing mode.

Manner 1: A user may manually trigger the rope jumping mode by tapping the electronic device.

To be specific, the electronic device receives and responds to the input of the user, enables the rope jumping mode, and starts rope jumping counting.

Manner 2: The electronic device determines, based on data collected by a sensor, to start the rope jumping mode. To be specific, the electronic device may automatically enter the rope jumping mode by using an exercise status identification algorithm without manual triggering by the user. The electronic device performs, by using the exercise status classification model, state classification on input acceleration data and gyroscope data, to identify a rope jumping mode and start rope jumping counting.

After rope jumping counting starts, in each preset period, the electronic device may iteratively calculate an iterative window width based on target exercise data collected by one or more motion sensors in a target time period. A specific process of iteratively calculating the iterative window width includes the following steps.

Step 1: The electronic device obtains a preset window width d₀ or a window width dᵢ₋₁ obtained in previous iterative calculation, where the preset window width may be manually set based on experience and built into the electronic device. It can be understood that, when the electronic device iteratively calculates a window width for the first time, the window width obtained by the electronic device is the preset window width. When the wearable device does not iteratively calculate the window width for the first time, the electronic device may obtain the window width obtained in previous iterative calculation, where i is a current iteration quantity.

Step 2: The electronic device may perform, based on the preset window width d₀ or the window width dᵢ₋₁ obtained in previous iterative calculation, peak searching on the target exercise data collected by the one or more motion sensors in the target time period, to obtain a preset peak quantity Nᵢ. It can be understood that, the target time period is a time period related to a current preset period. For example, it is assumed that the preset period is one second and a time length t of the target time period is 30 seconds. In a 0^{th} preset period, that is, when the electronic device starts to detect a rope jumping status of the user, the target time period may be from a 0^{th} second to a 30^{th} second. In a T^{th} preset period, the target time period may be from a T^{th} second to a (30+T)^{th} second. The time length t of the target time period may be set based on an actual situation, and is not limited in this embodiment of this application.

Step 3: The electronic device may obtain a reference window width Dᵢ of the target exercise data based on the preset peak quantity Nᵢ, to be specific, Dᵢ=1/fᵢ, and fᵢ=Nᵢ/t.

Step 4: The electronic device may perform peak searching on the target exercise data again based on the reference window width Dᵢ, to obtain a reference peak quantity N^ᵢ.

Step 5: The electronic device may determine the iterative window width based on the preset peak quantity and the reference peak quantity.

Specifically, the wearable device may obtain a preset rope jumping frequency fᵢ=Nᵢ/t of the target exercise data based on the preset peak quantity and the time length t of the target time period.

The wearable device may obtain a reference rope jumping frequency f^ᵢ=N^ᵢ/t of the target exercise data based on the reference peak quantity N^ᵢ and the time length t of the target time period.

The electronic device may calculate an absolute value |fᵢ-f^ᵢ| of a difference between the preset rope jumping frequency fᵢ and the reference rope jumping frequency f^ᵢ. If the absolute value of the difference is less than a reference threshold, the iterative calculation ends, and it is determined that the iterative window width in the current preset period is dᵢ. If the absolute value of the difference is greater than or equal to the reference threshold, step 6 is performed. It is easy to understand that a case of "equal to" may alternatively be placed in another branch. For example, if the absolute value of the difference is less than or equal to the reference threshold, the iterative calculation ends, and it is determined that a current iterative window width is dᵢ.

Step 6: The electronic device updates the iterative window width based on the preset window width dᵢ and the reference window width Dᵢ, where an updated iterative window width is dᵢ₊₁=(dᵢ+Dᵢ)/2. If the current iteration quantity i is less than a preset iteration quantity, the electronic device jumps to step 2, and performs an (i+1)^{th} iterative calculation based on the updated window width. If the iteration quantity i is greater than or equal to the preset iteration quantity, it is determined that the iterative window width in the current preset period is (dᵢ+Dᵢ)/2. It is easy to understand that a case of "equal to" may alternatively be placed in another branch. For example, if the iteration quantity is less than or equal to the preset iteration quantity, the electronic device jumps to step 2, and performs an (i+1)^{th} iterative calculation based on the updated window width.

Next, in each preset period, after determining the iterative window width of the target exercise data, the electronic device may perform peak searching on the target exercise data in the target time period based on the iterative window width, to determine peaks included in the target exercise data, and a peak quantity, a peak location, a peak height, and the like. The peak searching may be specifically searching for local maximums of the target exercise data in the iterative window width. Further, the electronic device may detect a peak point of the target exercise data based on the iterative window width by using a peak detection algorithm. The peak detection algorithm may be a Hough-based peak detection algorithm.

The peak location is used to indicate location information of a moment at which a peak is located, and the peak height is used to indicate height information of a moment at which a peak is located. Then, in each preset period, the electronic device may extract a time domain feature and a frequency domain feature of the target exercise data in the target time period, remove an interference peak from the target exercise data and correct a peak based on the time domain feature and the frequency domain feature, and then identify an exercise status of the target exercise data by using a classifier (for example, a decision model) based on the time domain feature and the frequency domain feature. Specifically,
the electronic device may perform short-time Fourier transform processing on the exercise data in the target time period based on a preset window size and step, to obtain power spectral density data corresponding to different time windows, and concatenate the power spectral density data to obtain distribution of power spectral density with a frequency. A dominant frequency energy proportion of the exercise data can be obtained from the distribution of the power spectral density with the frequency.

The electronic device may detect an ineffective peak and an effective peak in the target exercise data based on a peak interval, where a peak interval between effective peaks is a data feature of the exercise data in time domain.

The electronic device may detect an ineffective peak and an effective peak in the target exercise data based on a peak-to-valley value, where a peak-to-valley value between an effective peak and a valley adjacent to the effective peak is a data feature of the exercise data in time domain.

For the ineffective peak detected from the target exercise data based on the peak interval and the ineffective peak detected from the target exercise data based on the peak-to-valley value, the electronic device may move the detected ineffective peaks to a container, to destroy the ineffective peaks in the target exercise data.

Because the target exercise data includes three-axis acceleration data and three-axis gyroscope data, in each preset period, the electronic device needs to separately extract a data feature of each-axis data. Finally, the electronic device inputs, to a trained decision model, a total of 18 variables including the dominant frequency energy proportion, the peak interval, and the peak-to-valley value of each-axis data, and the decision model may output a rope jumping status at a target moment. In each preset period, the target moment is an end moment of the target time period.

It can be understood that, in each preset period, the electronic device may input features such as the peak interval, the valley value, and the dominant frequency energy proportion of the target exercise data to the decision model, and output a rope jumping status of the user at the target moment. When the rope jumping status at the target moment is different from a rope jumping status at a previous moment of the target moment, it indicates that the rope jumping status of the user changes. The electronic device may input the rope jumping status at the target moment and a rope jumping status at each moment in a next preset time period of the target moment to a state transition model, and the electronic device may obtain the rope jumping status at the target time based on the state transition equation. An interval between the target moment and the previous moment of the target moment is a preset period. When the rope jumping status at each moment in the next preset time period in the state transition model is the same as the rope jumping status at the target moment, it may indicate that the rope jumping status of the user at the target moment lasts for a period of time and is not a suddenly changed exercise status, and the electronic device may obtain the rope jumping status at the target moment. When a rope jumping status at any moment in the next preset time period in the state transition model is different from the rope jumping status at the target moment, it may indicate that the rope jumping status of the user at the target moment is unstable, and the electronic device uses the rope jumping status at the previous moment of the target moment as the rope jumping status at the target moment.

In each preset period, if the electronic device learns, based on the state transition model, that the rope jumping status of the user at the target moment is a rope jumping interruption state, the electronic device may stop recording rope jumping, that is, stop collecting personal exercise data. After collecting exercise data again, the electronic device performs exercise status identification processing on the exercise data again. After identifying a rope jumping mode, the electronic device starts to analyze a rope jumping situation of the user.

In each preset period, if the electronic device learns, based on the state transition equation, that the rope jumping status of the user at the target moment is another rope jumping status other than the rope jumping interruption state, the electronic device may continue to iteratively calculate the iterative window width based on the target exercise data in the target time period in a next preset period until exercise data obtained when the user stops rope jumping is processed.

Finally, the exercise data is output in two manners: real-time data output and overall data output. Real-time data output: If the electronic device is connected to an electronic device, the electronic device may transmit a current rope jumping quantity, a current rope jumping frequency, and a current rope jumping status to the electronic device in real time by using a Bluetooth device.

Overall data output: If the electronic device is disconnected from an electronic device, the electronic device may first store data in a memory such as a flash. After the electronic device is connected to the electronic device, the electronic device packages the data and transmits the data to the electronic device through Bluetooth.

The electronic device receives and stores results from the electronic device, such as the rope jumping quantity, the rope jumping frequency, and the rope jumping status; display the results in an interface in real time; and after the exercise ends, output a result report including a rope jumping frequency curve, a rope jumping quantity, and a quantity of rope jumping interruptions. It should be noted that, a horizontal axis of the rope jumping frequency curve graph is time, and a vertical axis is a rope jumping frequency. At a moment when a rope jumping interruption occurs, a time point of the rope jumping interruption is marked in the frequency curve graph by using an iconic symbol (for example, a straight line, a triangle, or another special symbol). Through this curve, the user can intuitively understand a time point of a rope jumping interruption and a quantity of rope jumping interruptions of the user in a rope jumping process.

It should be noted that, the frequency curve graph is located at a lowest end of the rope jumping result report displayed by the electronic device, and the user may tap a display region of a rope jumping quantity, a quantity of rope jumping interruptions, or the like by using a jump function, to directly jump to the frequency curve graph.

It is easy to understand that, because an area of the display 12 of the electronic device is limited, a display form of the result of the rope jumping status displayed by the electronic device is also limited. Therefore, the electronic device displays values such as a rope jumping quantity, a quantity of rope jumping interruptions, and exercise time.

Next, a hardware architecture of the electronic device mentioned in the embodiments of this application is described.

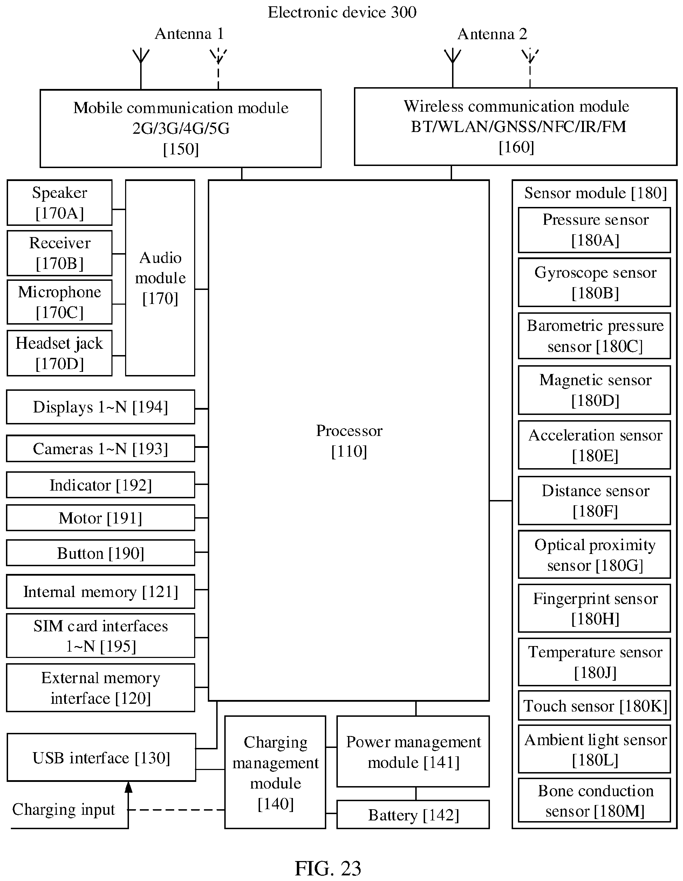

FIG. 23 is a schematic diagram of a structure of an electronic device 300.

This embodiment is described in detail below by using the electronic device 300 as an example. A device type of the electronic device 300 may include a mobile phone, a television, a tablet computer, a sound box, a watch, a desktop computer, a laptop computer, a handheld computer, a notebook computer, an ultra-mobile personal computer (ultra-mobile personal computer, UMPC), a netbook, a personal digital assistant (personal digital assistant, PDA), an augmented reality (augmented reality, AR)/virtual reality (virtual reality, VR) device, and the like. The device type of the electronic device 300 is not specifically limited in this embodiment of this application.

It should be understood that the electronic device 300 shown in FIG. 23 is merely an example, and the electronic device 300 may have more or fewer components than those shown in FIG. 23, may combine two or more components, or may have different component configurations. Various components shown in the figure may be implemented in hardware, software, or a combination of hardware and software including one or more signal processing and/or application-specific integrated circuits.

The electronic device 300 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, and a subscriber identity module (subscriber identification module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

In a first target time period, one or more motion sensors (for example, the gyroscope sensor 180B and the acceleration sensor 180E) collect first target exercise data. For detailed description, refer to step S2101 shown in FIG. 21. Details are not described herein again.

The processor 110 may determine a rope jumping status in the first target time period based on the first target exercise data by using an iterative window width. For detailed description, refer to step S2102 shown in FIG. 21. Details are not described herein again.

The processor 110 may determine a first quantity of rope jumping interruptions based on the rope jumping status in the first target time period. For detailed description, refer to step S2103 shown in FIG. 21. Details are not described herein again.

The first quantity of rope jumping interruptions is displayed at a first end moment by using the display 194. For detailed description, refer to step S2104 shown in FIG. 21. Details are not described herein again. It can be understood that, the structure shown in this embodiment of the present invention does not constitute a specific limitation on the electronic device 300. In some other embodiments of this application, the electronic device 300 may include more or fewer components than those shown in the figure, or combine some components, or split some components, or have different component arrangements. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, a neural-network processing unit (neural-network processing unit, NPU), and/or the like. Different processing units may be independent devices or may be integrated into one or more processors. The controller may be a nerve center and a command center of the electronic device 300. The controller may generate an operation control signal based on instruction operation code and a timing signal, to control instruction fetching and instruction execution.

A memory may be further disposed in the processor 110, and is configured to store instructions and data. In some embodiments, the memory in the processor 110 is a cache. The memory may store instructions or data just used or cyclically used by the processor 110. If the processor 110 needs to use the instructions or the data again, the processor 110 may directly invoke the instructions or the data from the memory. This avoids repeated access and reduces waiting time of the processor 110, thereby improving system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, or the like.

The charging management module 140 is configured to receive a charging input from a charger. The charger may be a wireless charger or may be a wired charger. In some embodiments of wired charging, the charging management module 140 may receive a charging input of a wired charger by using the USB interface 130. In some embodiments of wireless charging, the charging management module 140 may receive a wireless charging input by using a wireless charging coil of the electronic device 300. When charging the battery 142, the charging management module 140 may further supply power to the electronic device by using the power management module 141.

The power management module 141 is configured to connect to the battery 142, the charging management module 140, and the processor 110. The power management module 141 receives an input of the battery 142 and/or an input of the charging management module 140, and supplies power to the processor 110, the internal memory 121, an external memory, the display 194, the camera 193, the wireless communication module 160, and the like. The power management module 141 may be further configured to monitor parameters such as a battery capacity, a quantity of battery cycles, and a battery health status (leakage and impedance). In some other embodiments, the power management module 141 may alternatively be disposed in the processor 110. In some other embodiments, the power management module 141 and the charging management module 140 may alternatively be disposed in a same component.

A wireless communication function of the electronic device 300 may be implemented by using the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the electronic device 300 may be configured to cover one or more communication frequency bands. Different antennas may be further multiplexed to improve antenna utilization.

The mobile communication module 150 may provide a solution for wireless communication including 2G/3G/4G/5G and the like applied to the electronic device 300. The mobile communication module 150 may include at least one filter, switch, power amplifier, low noise amplifier (low noise amplifier, LNA), and the like. The mobile communication module 150 may receive an electromagnetic wave by using the antenna 1, perform processing such as filtering and amplification on the received electromagnetic wave, and send a processed electromagnetic wave to the modem processor for demodulation. The mobile communication module 150 may further amplify a signal modulated by the modem processor, and convert, by using the antenna 1, an amplified signal into an electromagnetic wave for radiation.

The modem processor may include a modulator and a demodulator. The modulator is configured to modulate a to-be-sent low-frequency baseband signal into a medium-high-frequency signal. The demodulator is configured to demodulate a received electromagnetic wave signal into a low-frequency baseband signal.

The wireless communication module 160 may provide a solution for wireless communication including a wireless local area network (wireless local area networks, WLAN) (for example, a wireless fidelity (wireless fidelity, Wi-Fi) network), Bluetooth (bluetooth, BT), a global navigation satellite system (global navigation satellite system, GNSS), frequency modulation (frequency modulation, FM), near field communication (near field communication, NFC), an infrared (infrared, IR) technology, and the like applied to the electronic device 300. The wireless communication module 160 may be one or more devices integrating at least one communication processing module. The wireless communication module 160 receives an electromagnetic wave by using the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert, by using the antenna 2, the signal into an electromagnetic wave for radiation.

The electronic device 300 implements a display function by using the GPU, the display 194, the application processor, and the like. The display 194 is configured to display an image, a video, or the like. The display 194 includes a display panel.

The electronic device 300 may implement a photographing function by using the ISP, the camera 193, the video codec, the GPU, the display 194, the application processor, and the like.

The ISP is configured to process data fed back by the camera 193. For example, during photographing, a shutter is opened, and light is transmitted to a photosensitive element of the camera through a lens. An optical signal is converted into an electrical signal. The photosensitive element of the camera transmits the electrical signal to the ISP for processing, to convert the electrical signal into an image visible to naked eyes.

The camera 193 is configured to capture a still image or a video. An optical image is generated for an object through the lens and is projected onto the photosensitive element.

The digital signal processor is configured to process a digital signal, and can process another digital signal in addition to a digital image signal.

The NPU is a neural-network (neural-network, NN) computing processor, which quickly processes input information by referring to a biological neural network structure, for example, by referring to a transmission mode between human brain neurons, and may further perform self-learning continuously.

The external memory interface 120 may be configured to connect to an external storage card, for example, a Micro SD card, to extend a storage capability of the electronic device 300.

The internal memory 121 may be configured to store computer-executable program code, and the executable program code includes instructions. The processor 110 runs the instructions stored in the internal memory 121, to execute various function applications and data processing of the electronic device 300.

The electronic device 300 may implement audio functions such as music playing and recording by using the audio module 170, the speaker 170A, the receiver 170B, the microphone 170C, the headset jack 170D, the application processor, and the like.

The audio module 170 is configured to convert digital audio information into an analog audio signal for output, and is also configured to convert an analog audio input into a digital audio signal. The audio module 170 may be further configured to encode and decode an audio signal.

The speaker 170A, also referred to as a "loudspeaker", is configured to convert an audio electrical signal into a sound signal. The electronic device 300 may be used to listen to music or listen to a hands-free call by using the speaker 170A.

The receiver 170B, also referred to as an "earpiece", is configured to convert an audio electrical signal into a sound signal. When a call is answered or a voice message is listened to by using the electronic device 300, the receiver 170B may be put close to a human ear to listen to a voice.

The microphone 170C, also referred to as a "mic" or "mike", is configured to convert a sound signal into an electrical signal. When making a call or sending a voice message, a user may make a sound by approaching the mouth to the microphone 170C, to input a sound signal to the microphone 170C. At least one microphone 170C may be disposed in the electronic device 300. In some other embodiments, the electronic device 300 may be provided with two microphones 170C, to implement a noise reduction function in addition to sound signal collection. In some other embodiments, the electronic device 300 may alternatively be provided with three, four, or more microphones 170C, to collect a sound signal, reduce noise, and further identify a sound source, so as to implement a directional recording function and the like.

In this embodiment, the electronic device 300 collects a sound signal by using the microphone 170C, and transmits the sound signal to an application in the electronic device 300.

The headset jack 170D is configured to connect to a wired headset. The headset jack 170D may be the USB interface 130, or may be a 3.5 mm open mobile electronic device platform (open mobile terminal platform, OMTP) standard interface, or a cellular telecommunications industry association of the USA (cellular telecommunications industry association of the USA, CTIA) standard interface.

The pressure sensor 180A is configured to sense a pressure signal, and can convert the pressure signal into an electrical signal. In some embodiments, the pressure sensor 180A may be disposed on the display 194. There are many types of pressure sensors 180A, for example, a resistive pressure sensor, an inductive pressure sensor, and a capacitive pressure sensor. The capacitive pressure sensor may include at least two parallel plates having a conducting material. When force is applied to the pressure sensor 180A, a capacitance between electrodes changes. The electronic device 300 determines intensity of pressure based on a change of the capacitance. When a touch operation is performed on the display 194, the electronic device 300 detects intensity of the touch operation by using the pressure sensor 180A. The electronic device 300 may also calculate a touch location based on a detected signal of the pressure sensor 180A. In some embodiments, touch operations performed on a same touch location but having different touch operation intensity may correspond to different operation instructions. For example, when a touch operation whose touch operation intensity is less than a first pressure threshold is performed on a Messages application icon, an instruction for viewing an SMS message is executed. For example, when a touch operation whose touch operation intensity is greater than or equal to the first pressure threshold is performed on the Messages application icon, an instruction for creating a new SMS message is executed.

The gyroscope sensor 180B may be configured to determine a motion posture of the electronic device 300. In some embodiments, angular velocities of the electronic device 300 around three axes (that is, an x axis, a y axis, and a z axis) may be determined by using the gyroscope sensor 180B. The gyroscope sensor 180B may be configured to implement image stabilization during photographing. For example, when a shutter is pressed, the gyroscope sensor 180B detects an angle at which the electronic device 300 jitters, calculates, based on the angle, a distance for which a lens module needs to compensate, and allows the lens to cancel the jitter of the electronic device 300 through reverse motion, to implement image stabilization. The gyroscope sensor 180B may be further used in scenarios of navigation and a motion sensing game.

The barometric pressure sensor 180C is configured to measure barometric pressure. In some embodiments, the electronic device 300 calculates an altitude by using a barometric pressure value measured by the barometric pressure sensor 180C, to assist in positioning and navigation.

The magnetic sensor 180D may include a Hall effect sensor. The electronic device 300 may detect opening/closing of a flip leather case by using the magnetic sensor 180D. In some embodiments, when the electronic device 300 is a flip phone, the electronic device 300 may detect opening/closing of a flip cover based on the magnetic sensor 180D, and further set features such as automatic unlocking of the flip cover based on a detected opening/closing state of the leather case or a detected opening/closing state of the flip cover.

The acceleration sensor 180E may detect acceleration values of the electronic device 300 in all directions (usually in three axes), may detect a magnitude and a direction of gravity when the electronic device 300 is still, and may be further configured to identify a posture of the electronic device, and is applied to applications such as switching between a landscape mode and a portrait mode and a pedometer.

The distance sensor 180F is configured to measure a distance. The electronic device 300 may measure a distance in an infrared manner or a laser manner. In some embodiments, in a photographing scene, the electronic device 300 may measure a distance by using the distance sensor 180F, to implement quick focusing.

The optical proximity sensor 180G may include, for example, a light-emitting diode (LED) and an optical detector such as a photodiode. The light-emitting diode may be an infrared light-emitting diode. The electronic device 300 emits infrared light by using the light-emitting diode. The electronic device 300 detects infrared reflected light from a nearby object by using the photodiode. When detecting sufficient reflected light, the electronic device 300 may determine that there is an object near the electronic device 300; or when detecting insufficient reflected light, the electronic device 300 may determine that there is no object near the electronic device 300. The electronic device 300 may detect, by using the optical proximity sensor 180G, that a user holds the electronic device 300 close to an ear for a call, to implement automatic screen-off to save power. The optical proximity sensor 180G may also be used for automatically unlocking and locking a screen in a leather case mode and a pocket mode.

The ambient light sensor 180L is configured to sense ambient light brightness. The electronic device 300 may adaptively adjust brightness of the display 194 based on the sensed ambient light brightness. The ambient light sensor 180L may also be configured to automatically adjust white balance during photographing. The ambient light sensor 180L may further cooperate with the optical proximity sensor 180G to detect whether the electronic device 300 is in a pocket to prevent an accidental touch.

The fingerprint sensor 180H is configured to collect a fingerprint. The electronic device 300 may implement fingerprint unlocking, application lock accessing, fingerprint-based photographing, fingerprint-based call answering, and the like by using a feature of the collected fingerprint.

The temperature sensor 180J is configured to detect a temperature. In some embodiments, the electronic device 300 performs a temperature processing policy by using the temperature detected by the temperature sensor 180J. For example, when the temperature reported by the temperature sensor 180J exceeds a threshold, the electronic device 300 reduces performance of a processor located near the temperature sensor 180J, to reduce power consumption to implement thermal protection. In some other embodiments, when the temperature is lower than another threshold, the electronic device 300 heats the battery 142, to prevent the electronic device 300 from being abnormally powered off due to a low temperature. In some other embodiments, when the temperature is lower than still another threshold, the electronic device 300 boosts an output voltage of the battery 142, to avoid abnormal power-off caused by a low temperature.

The touch sensor 180K is also referred to as a touch panel or a touch-sensitive surface. The touch sensor 180K may be disposed on the display 194. The touch sensor 180K and the display 194 form a touchscreen, which is also referred to as a "touch control screen". The touch sensor 180K is configured to detect a touch operation performed on or near the touch sensor 180K. The touch sensor can transmit the detected touch operation to the application processor to determine a type of a touch event. A visual output related to the touch operation may be provided by using the display 194. In some other embodiments, the touch sensor 180K may alternatively be disposed on a surface of the electronic device 300 at a location different from that of the display 194.

The bone conduction sensor 180M may obtain a vibration signal. In some embodiments, the bone conduction sensor 180M may obtain a vibration signal of a vibration bone in a human vocal-cord part. The bone conduction sensor 180M may also be in contact with a human pulse to receive a blood pressure beating signal. In some embodiments, the bone conduction sensor 180M may alternatively be disposed in a headset to form a bone conduction headset in combination with the headset. The audio module 170 may obtain a speech signal through parsing based on the vibration signal that is of the vibration bone in the vocal-cord part and that is obtained by the bone conduction sensor 180M, to implement a speech function. The application processor may parse heart rate information based on the blood pressure beating signal obtained by the bone conduction sensor 180M, to implement a heart rate detection function.

The button 190 includes a power on/off button, a volume button, and the like. The button 190 may be a mechanical button, or may be a touch button. The electronic device 300 may receive a key input to generate a key signal input related to user settings and function control of the electronic device 300.

The motor 191 may generate a vibration prompt. The motor 191 may be configured to provide a vibration prompt for an incoming call, and may also be configured to provide vibration feedback for a touch. For example, touch operations performed on different applications (for example, photographing and audio playing) may correspond to different vibration feedback effects. For touch operations performed in different regions of the display 194, the motor 191 may also correspond to different vibration feedback effects. Different application scenarios (for example, a time reminder, information receiving, an alarm clock, and a game) may also correspond to different vibration feedback effects. A touch vibration feedback effect may be further customized.

The indicator 192 may be an indicator light, may be configured to indicate a charging status or a power change, and may also be configured to indicate a message, a missed incoming call, a notification, or the like.

The SIM card interface 195 is configured to connect to a SIM card. The SIM card may be inserted into the SIM card interface 195 or removed from the SIM card interface 195, to implement contact with or separation from the electronic device 300. The electronic device 300 may support one or N SIM card interfaces, where N is a positive integer greater than 1. The SIM card interface 195 may support a Nano SIM card, a Micro SIM card, a SIM card, or the like. A plurality of cards may be simultaneously inserted into a same SIM card interface 195. The plurality of cards may be of a same type or may be of different types. The SIM card interface 195 may also be compatible with SIM cards of different types. The SIM card interface 195 may also be compatible with an external storage card. The electronic device 300 interacts with a network by using the SIM card, to implement functions such as a call and data communication. In some embodiments, the electronic device 300 uses an eSIM, that is, an embedded SIM card. The eSIM card may be embedded in the electronic device 300 and cannot be separated from the electronic device 300.

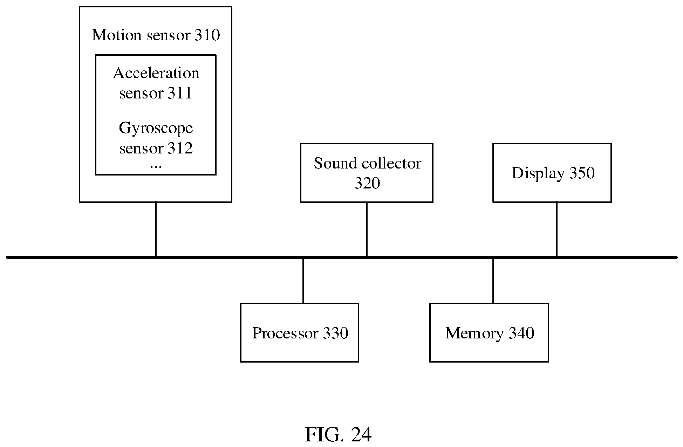

FIG. 24 is a schematic diagram of a structure of a wearable device 100. As shown in FIG. 24, the wearable device 100 may include a motion sensor 310, a sound collector 320, a processor 330, a memory 340, and a display 350 that are connected by using a bus.

The motion sensor 310 may be configured to collect first target exercise data of a user in a first target time period. The first exercise data may be exercise data of a wrist during rope jumping of the user, and may include one or more of the following: three-axis acceleration data and three-axis angular velocity data.

The motion sensor 310 may include an acceleration sensor 311 and a gyroscope sensor 312. After the wearable device 100 enables a golf mode, both the acceleration sensor 311 and the gyroscope sensor 312 are in a working state. The acceleration sensor 311 may collect acceleration data of the wrist of the user, and the gyroscope sensor 312 may collect angular velocity data of the wrist of the user. The motion sensor 310 may send the acceleration data and the angular velocity data to the processor 330. The motion sensor 310 is not limited to the acceleration sensor 311 and the gyroscope sensor 312, and may alternatively include more motion sensors. This is not limited in this application.

The sound collector 320 may be configured to collect a first sound signal in the first target time period. The sound collector 320 may be a microphone or another apparatus configured to collect a sound signal. This is not limited in this embodiment of this application. After the wearable device 100 enables the golf mode, the sound collector 320 is in a working state. The wearable device 100 may send the first sound signal to the processor 330.

The processor 330 may process the acceleration data and the angular velocity data to obtain an iterative window width in the first target time period through calculation through iteration, determine a rope jumping status in the first target time period based on the first target exercise data by using the iterative window width, and determine a first quantity of rope jumping interruptions based on the rope jumping status in the first target time period.

The memory 340 may be configured to store a Gaussian mixture model, exercise data, and the like. The Gaussian mixture model may be a trained Gaussian mixture model.

The display 350 may be configured to display a user interface including a control used to enable a rope jumping mode, a user interface including rope jumping exercise data, or another user interface. The display 350 may display the first quantity of rope jumping interruptions and another rope jumping result at a first end moment.

It should be noted that the wearable device 100 further includes a touch panel coupled to the processor 330. The display 350 may display the user interface including the control used to enable the rope jumping mode. When the touch panel detects a user operation (for example, a tap) performed on the control used to enable the rope jumping mode, the processor 330 may determine whether the motion sensor 310 and the sound collector 320 are enabled. If the motion sensor 310 and the sound collector 320 are not enabled, the processor 330 may enable the motion sensor 310 and the sound collector 320.

As used in the foregoing embodiments, based on the context, the term "when" may be interpreted as a meaning of "if", "after", "in response to determining", or "in response to detecting". Similarly, based on the context, the phrase "when determining" or "if detecting (a stated condition or event)" may be interpreted as a meaning of "if determining ... ", "in response to determining ... ", "when detecting (a stated condition or event)", or "in response to detecting ... (a stated condition or event)".

All or some of the foregoing embodiments may be implemented by software, hardware, firmware, or any combination thereof. When the software is used for implementation, the embodiments may be entirely or partially implemented in a form of a computer program product. The computer program product includes one or more computer instructions. When the computer program instructions are loaded and executed on a computer, all or some of the procedures or the functions according to the embodiments of this application are produced. The computer may be a general-purpose computer, a dedicated computer, a computer network, or another programmable apparatus. The computer instructions may be stored in a computer-readable storage medium or transmitted from one computer-readable storage medium to another computer-readable storage medium. For example, the computer instructions may be transmitted from one website, computer, server, or data center to another website, computer, server, or data center in a wired manner (for example, a coaxial cable, an optical fiber, or a digital subscriber line) or a wireless manner (for example, infrared, wireless, or microwave). The computer-readable storage medium may be any available medium accessible by a computer, or include one or more data storage devices such as a server or a data center integrating an available medium. The available medium may be a magnetic medium (for example, a floppy disk, a hard disk, a magnetic tape), an optical medium (for example, a DVD), or a semiconductor medium (for example, a solid-state drive), or the like.

A person of ordinary skill in the art may understand that all or some of the procedures of the methods in the foregoing embodiments are implemented. The procedures may be completed by a computer program instructing related hardware. The program may be stored in the computer-readable storage medium. When the program is executed, the procedures in the foregoing method embodiments may be included. The foregoing storage medium includes any medium that can store program code, for example, a ROM, a random access memory RAM, a magnetic disk, or an optical disc.

## Claims

1. A rope jumping status detection method, wherein the method is applied to an electronic device, and the electronic device comprises one or more motion sensors; and the method comprises:
collecting (S2101) first target exercise data in a first target time period by using the one or more motion sensors, wherein the first target time period comprises a first end moment, and the first end moment is used to identify an end moment of the first target time period;
determining (S2102) a rope jumping status in the first target time period based on the first target exercise data by using an iterative window width, wherein the iterative window width is used to identify that the window width is obtained through iteration;
determining (S2103) a first quantity of rope jumping interruptions based on the rope jumping status in the first target time period, wherein the first quantity of rope jumping interruptions is used to identify a quantity of rope jumping interruptions in the first target time period; and
displaying (S2104) the first quantity of rope jumping interruptions at the first end moment;
wherein the determining a rope jumping status in the first target time period based on the first target exercise data by using an iterative window width comprises:
determining an iterative window width in the first target time period based on the first target exercise data;
determining, by using the iterative window width, peaks comprised in the first target exercise data, wherein peak searching is performed to search for local maximums of the first target exercise data in the iterative window width; and
determining the rope jumping status in the first target time period based on the peaks comprised in the first target exercise data;
wherein the determining an iterative window width in the first target time period based on the first target exercise data comprises:
performing peak searching on the first target exercise data based on a preset window width or a window width obtained in previous iterative calculation, to obtain a preset peak quantity;
obtaining a reference window width of the first target exercise data based on the preset peak quantity;
performing peak searching on the first target exercise data again based on the reference window width, to obtain a reference peak quantity; and
determining the iterative window width in the first target time period based on the preset peak quantity and the reference peak quantity.

2. The method according to claim 1, wherein the determining the iterative window width in the first target time period based on the preset peak quantity and the reference peak quantity comprises:
obtaining a preset rope jumping frequency in the first target time period based on the preset peak quantity;
obtaining a reference rope jumping frequency in the first target time period based on the reference peak quantity; and
calculating an absolute value of a difference between the preset rope jumping frequency and the reference rope jumping frequency, wherein
if the absolute value of the difference is greater than or equal to a reference threshold, the iterative window width is an average value of the preset window width and the reference window width.

3. The method according to any one of claims 1 to 2, wherein the determining the rope jumping status in the first target time period based on the peaks comprised in the first target exercise data comprises:
extracting a frequency domain feature in the first target time period based on the first target exercise data;
extracting a time domain feature in the first target time period based on the peaks comprised in the first target exercise data; and
determining the rope jumping status in the first target time period based on the time domain feature and the frequency domain feature.

4. The method according to claim 3, wherein the time domain feature comprises a peak interval, and the extracting a time domain feature in the first target time period based on the peaks comprised in the first target exercise data comprises:
calculating a first peak interval between any two adjacent peaks in the peaks comprised in the first target exercise data;
determining an effective peak in the first target exercise data based on the first peak interval; and
using a second peak interval between any two adjacent effective peaks as the time domain feature in the first target time period.

5. The method according to claim 4, wherein the determining an effective peak in the first target exercise data based on the first peak interval comprises:
if the first peak interval is greater than or equal to a first preset threshold, determining that the former in the any two adjacent peaks is the effective peak.

6. The method according to claim 3, wherein the time domain feature comprises a peak-to-valley value, and the extracting a time domain feature in the first target time period based on the peaks comprised in the first target exercise data comprises:
calculating peak-to-valley values of the peaks comprised in the first target exercise data, wherein a peak-to-valley value of each peak is a height difference between the peak and a nearest valley after the peak;
calculating a ratio between peak-to-valley values of any two adjacent peaks;
determining an effective peak in the first target exercise data based on the ratio between the peak-to-valley values of the any two adjacent peaks; and
using a peak-to-valley value of the effective peak as the time domain feature in the first target time period.

7. The method according to claim 6, wherein the determining an effective peak in the first target exercise data based on the ratio between the peak-to-valley values of the any two adjacent peaks comprises:
if the ratio between the peak-to-valley values of the any two adjacent peaks is greater than or equal to a second preset threshold, determining that the former in the any two adjacent peaks is the effective peak.

8. The method according to claim 3, wherein the frequency domain feature comprises a dominant frequency energy proportion, and the extracting a frequency domain feature in the first target time period based on the first target exercise data comprises:
extracting power spectral density of the first target exercise data through a Fourier transform; and
determining the dominant frequency energy proportion in the first target time period from the power spectral density.

9. The method according to any one of claims 3 to 8, wherein the time domain feature comprises the peak interval and the peak-to-valley value, the frequency domain feature comprises the dominant frequency energy proportion, and the determining the rope jumping status in the first target time period based on the time domain feature and the frequency domain feature comprises:
inputting the peak interval, the peak-to-valley value, and the dominant frequency energy proportion to a decision model; and
determining the rope jumping status in the first target time period by using the decision model.

10. The method according to claim 9, after the determining the rope jumping status in the first target time period by using the decision model, further comprising:
when the rope jumping status in the first target time period is different from a rope jumping status in a previous target time period of the first target time period, inputting the rope jumping status in the first target time period and a rope jumping status in each target time period in a next preset time period of the first target time period to a state transition model; and
obtaining the rope jumping status in the first target time period by using the state transition model.

11. The method according to claim 10, wherein the obtaining the rope jumping status in the first target time period by using the state transition model comprises:
when the rope jumping status in each target time period in the next preset time period in the state transition model is the same as the rope jumping status in the first target time period, obtaining the rope jumping status in the first target time period; and
when a rope jumping status in any time period in the next preset time period in the state transition model is different from the rope jumping status in the first target time period, using the rope jumping status in the previous target time period of the first target time period as the rope jumping status in the first target time period.

12. The method according to any one of claims 1 to 11, wherein the rope jumping status comprises one or more of the following: a rope jumping interruption state, a uniform-speed jumping state, an accelerated jumping state, a decelerated jumping state, and a variable-speed jumping state.

13. An electronic device (300), comprising one or more processors (110), one or more memories (121), one or more motion sensors (180), a sound collector (170), and a display (194), wherein the one or more memories, the one or more motion sensors, the sound collector, and the display are coupled to the one or more processors; the one or more memories are configured to store computer program code, and the computer program code comprises computer instructions; and the one or more processors invoke the computer instructions, so that the electronic device performs the method according to any one of claims 1 to 12.

## Patentansprüche

1. Ein Verfahren zur Erkennung des Seilspringstatus, wobei das Verfahren auf einem elektronischen Gerät angewendet wird und das elektronische Gerät einen oder mehrere Bewegungssensoren umfasst; und das Verfahren umfasst:
Sammeln (S2101) von ersten Ziel-Trainingsdaten in einem ersten Zielzeitraum unter Verwendung des einen oder mehrerer Bewegungssensoren, wobei der erste Zielzeitraum einen ersten Endzeitpunkt umfasst und der erste Endzeitpunkt genutzt wird, um einen Endzeitpunkt des ersten Zielzeitraums zu identifizieren;
Bestimmen (S2102) eines Seilspringstatus im ersten Zielzeitraum basierend auf den ersten Ziel-Trainingsdaten unter Verwendung einer iterativen Fensterbreite, wobei die iterative Fensterbreite dazu verwendet wird, zu identifizieren, dass die Fensterbreite durch Iteration erhalten wurde;
Bestimmen (S2103) einer ersten Anzahl von Seilsprungunterbrechungen basierend auf dem Seilspringstatus im ersten Zielzeitraum, wobei die erste Anzahl von Seilsprungunterbrechungen dazu dient, eine Anzahl von Seilsprungunterbrechungen im ersten Zielzeitraum zu identifizieren; und
Anzeigen (S2104) der ersten Anzahl von Seilsprungunterbrechungen zum ersten Endzeitpunkt;
Wobei das Bestimmen eines Seilspringstatus im ersten Zielzeitraum basierend auf den ersten Ziel-Trainingsdaten unter Verwendung einer iterativen Fensterbreite Folgendes umfasst:
Bestimmen einer iterativen Fensterbreite im ersten Zielzeitraum auf Basis der ersten Ziel-Trainingsdaten;
Bestimmen der in den ersten Ziel-Trainingsdaten enthaltenen Spitzen mithilfe der iterativen Fensterbreite, wobei die Spitzensuche durchgeführt wird, um lokale Maxima der ersten Ziel-Trainingsdaten innerhalb der iterativen Fensterbreite zu identifizieren;und
Bestimmen des Seilspringstatus im ersten Zielzeitraum auf Basis der in den ersten Ziel-Trainingsdaten enthaltenen Spitzen;
Wobei das Bestimmen einer iterativen Fensterbreite im ersten Zielzeitraum basierend auf den ersten Ziel-Trainingsdaten Folgendes umfasst:
Durchführen einer Spitzensuche in den ersten Ziel-Trainingsdaten auf Basis einer voreingestellten Fensterbreite oder einer durch die vorherige Iterationsberechnung erhaltenen Fensterbreite, um eine voreingestellte Spitzenanzahl zu erhalten;
Ermitteln einer Referenzfensterbreite der ersten Ziel-Trainingsdaten basierend auf der voreingestellten Spitzenanzahl;
Erneutes Durchführen der Spitzensuche in den ersten Ziel-Trainingsdaten auf Basis der Referenzfensterbreite, um eine Referenzspitzenanzahl zu erhalten; und
Bestimmen der iterativen Fensterbreite im ersten Zielzeitraum basierend auf der voreingestellten Spitzenanzahl und der Referenzspitzenanzahl.

2. Verfahren nach Anspruch 1, wobei das Bestimmen der iterativen Fensterbreite in der ersten Zielzeitperiode basierend auf der voreingestellten Spitzenanzahl und der Referenzspitzenanzahl Folgendes umfasst:
Ermitteln einer voreingestellten Seilspringfrequenz in der ersten Zielzeitperiode basierend auf der voreingestellten Spitzenanzahl;
Ermitteln einer Referenz-Seilspringfrequenz in der ersten Zielzeitperiode basierend auf der Referenzspitzenanzahl; und
Berechnen eines absoluten Werts einer Differenz zwischen der voreingestellten Seilspringfrequenz und der Referenz-Seilspringfrequenz, wobei
wenn der absolute Wert der Differenz größer oder gleich einem Referenzschwellenwert ist, ist die iterative Fensterbreite ein Mittelwert der voreingestellten Fensterbreite und der Referenzfensterbreite.

3. Verfahren nach einem der Ansprüche 1 bis 2, wobei das Bestimmen des Seilspringstatus in der ersten Zielzeitperiode basierend auf den in den ersten Zielübungsdaten enthaltenen Spitzen Folgendes umfasst:
Extrahieren eines Frequenzbereichsmerkmals in der ersten Zielzeitperiode basierend auf den ersten Zielübungsdaten;
Extrahieren eines Zeitbereichsmerkmals in der ersten Zielzeitperiode basierend auf den in den ersten Zielübungsdaten enthaltenen Spitzen; und
Bestimmen des Seilspringstatus in der ersten Zielzeitperiode basierend auf dem Zeitbereichsmerkmal und dem Frequenzbereichsmerkmal.

4. Verfahren nach Anspruch 3, wobei das Zeitbereichsmerkmal ein Spitzenintervall umfasst und das Extrahieren eines Zeitbereichsmerkmals in der ersten Zielzeitperiode basierend auf den in den ersten Zielübungsdaten enthaltenen Spitzen Folgendes umfasst:
Berechnen eines ersten Spitzenintervalls zwischen beliebigen zwei benachbarten Spitzen in den in den ersten Zielübungsdaten enthaltenen Spitzen;
Bestimmen einer effektiven Spitze in den ersten Zielübungsdaten basierend auf dem ersten Spitzenintervall; und
Verwendung eines zweiten Spitzenintervalls zwischen beliebigen zwei benachbarten effektiven Spitzen als Zeitbereichsmerkmal in der ersten Zielzeitperiode.

5. Verfahren nach Anspruch 4, wobei das Bestimmen einer effektiven Spitze in den ersten Zielübungsdaten basierend auf dem ersten Spitzenintervall Folgendes umfasst:
Wenn das erste Spitzenintervall größer oder gleich einem ersten voreingestellten Schwellenwert ist, wird bestimmt, dass die erste der beiden benachbarten Spitzen die effektive Spitze ist.

6. Verfahren nach Anspruch 3, wobei das Zeitbereichsmerkmal einen Gipfel-Tal-Wert umfasst und das Extrahieren eines Zeitbereichsmerkmals in der ersten Zielzeitperiode basierend auf den in den ersten Zielübungsdaten enthaltenen Spitzen Folgendes umfasst:
Berechnung der Peak-to-Valley-Werte der in den ersten Zielübungsdaten enthaltenen Peaks, wobei ein Peak-to-Valley-Wert jedes Peaks eine Höhendifferenz zwischen dem Peak und dem nächstgelegenen Tal nach dem Peak ist;
Berechnung eines Verhältnisses zwischen den Peak-to-Valley-Werten zweier benachbarter Peaks;
Bestimmung eines effektiven Peaks in den ersten Zielübungsdaten basierend auf dem Verhältnis der Peak-to-Valley-Werte zweier benachbarter Peaks; und
Verwendung eines Peak-to-Valley-Wertes des effektiven Peaks als Zeitbereichsmerkmal in dem ersten Zielzeitraum.

7. Verfahren gemäß Anspruch 6, wobei die Bestimmung eines effektiven Peaks in den ersten Zielübungsdaten basierend auf dem Verhältnis der Peak-to-Valley-Werte zweier benachbarter Peaks Folgendes umfasst:
Falls das Verhältnis der Peak-to-Valley-Werte zweier benachbarter Peaks größer oder gleich einem zweiten voreingestellten Schwellenwert ist, wird bestimmt, dass der frühere der beiden benachbarten Peaks der effektive Peak ist.

8. Verfahren gemäß Anspruch 3, wobei das Frequenzbereichsmerkmal einen dominanten Frequenzenergieanteil umfasst, und das Extrahieren eines Frequenzbereichsmerkmals im ersten Zielzeitraum basierend auf den ersten Zielübungsdaten Folgendes umfasst:
Extrahieren der Leistungsdichtespektrums der ersten Zielübungsdaten durch eine FourierTransformation; und
Bestimmung des dominanten Frequenzenergieanteils im ersten Zielzeitraum aus dem Leistungsdichtespektrum.

9. Verfahren gemäß einem der Ansprüche 3 bis 8, wobei das Zeitbereichsmerkmal das Peakintervall und den Peak-to-Valley-Wert umfasst, das Frequenzbereichsmerkmal den dominanten Frequenzenergieanteil umfasst, und die Bestimmung des Seilspringstatus im ersten Zielzeitraum basierend auf dem Zeitbereichsmerkmal und dem Frequenzbereichsmerkmal Folgendes umfasst:
Eingabe von Peakintervall, Peak-to-Valley-Wert und dominantem Frequenzenergieanteil in ein Entscheidungsmodell; und
Bestimmung des Seilspringstatus im ersten Zielzeitraum durch Verwendung des Entscheidungsmodells.

10. Verfahren gemäß Anspruch 9, nach der Bestimmung des Seilspringstatus im ersten Zielzeitraum durch Verwendung des Entscheidungsmodells, weiterhin umfassend:
Wenn der Seilspringstatus im ersten Zielzeitraum von einem Seilspringstatus im vorangegangenen Zielzeitraum des ersten Zielzeitraums abweicht, Eingabe des Seilspringstatus im ersten Zielzeitraum und eines Seilspringstatus jedes Zielzeitraums in einem nächsten voreingestellten Zeitraum des ersten Zielzeitraums in ein Zustandsübergangsmodell; und
Die Ermittlung des Seilspringstatus im ersten Zielzeitraum mithilfe des Zustandsübergangsmodells.

11. Verfahren nach Anspruch 10, wobei das Ermitteln des Seilspringstatus im ersten Zielzeitraum mittels des Zustandsübergangsmodells Folgendes umfasst:
Wenn der Seilspringstatus in jedem Zielzeitraum des nächsten voreingestellten Zeitraums im Zustandsübergangsmodell dem Seilspringstatus im ersten Zielzeitraum entspricht, wird der Seilspringstatus im ersten Zielzeitraum ermittelt; und
Wenn ein Seilspringstatus in einem beliebigen Zeitraum des nächsten voreingestellten Zeitraums im Zustandsübergangsmodell vom Seilspringstatus im ersten Zielzeitraum abweicht, wird der Seilspringstatus im vorhergehenden Zielzeitraum des ersten Zielzeitraums als Seilspringstatus im ersten Zielzeitraum verwendet.

12. Verfahren nach einem der Ansprüche 1 bis 11, wobei der Seilspringstatus einen oder mehrere der folgenden Zustände umfasst: einen Seilsprungunterbrechungszustand, einen Sprungzustand mit konstanter Geschwindigkeit, einen beschleunigten Sprungzustand, einen verlangsamten Sprungzustand und einen Sprungzustand mit variabler Geschwindigkeit.

13. Elektronisches Gerät (300), umfassend einen oder mehrere Prozessoren (110), einen oder mehrere Speicher (121), einen oder mehrere Bewegungssensoren (180), einen Klangsammler (170) und ein Display (194), wobei der oder die Speicher, die Bewegungssensoren, der Klangsammler und das Display mit dem oder den Prozessoren gekoppelt sind; wobei der oder die Speicher zur Speicherung eines Computerprogrammcodes eingerichtet sind, und der Computerprogrammcode Computeranweisungen umfasst; und der oder die Prozessoren die Computeranweisungen aufrufen, sodass das elektronische Gerät das Verfahren nach einem der Ansprüche 1 bis 12 ausführt.

## Revendications

1. Procédé de détection de l'état de saut à la corde, ledit procédé étant appliqué à un dispositif électronique, et le dispositif électronique comprenant un ou plusieurs capteurs de mouvement ; le procédé comprend :
recueillir (S2101) des premières données d'exercice cibles au cours d'une première période temporelle cible à l'aide d'un ou de plusieurs capteurs de mouvement, la première période temporelle cible comprenant un premier instant final, et ce premier instant final étant utilisé pour identifier un instant de fin de la première période temporelle cible ;
déterminer (S2102) un état de saut à la corde pendant la première période temporelle cible sur la base des premières données d'exercice cibles à l'aide d'une largeur de fenêtre itérative, la largeur de fenêtre itérative servant à indiquer que la largeur de la fenêtre est obtenue par itération ;
déterminer (S2103) une première quantité d'interruptions de saut à la corde sur la base de l'état de saut à la corde dans la première période temporelle cible, la première quantité d'interruptions de saut à la corde étant utilisée pour identifier le nombre d'interruptions de saut à la corde pendant la première période temporelle cible ; et
afficher (S2104) la première quantité d'interruptions de saut à la corde au premier instant final ;
le fait de déterminer un état de saut à la corde dans la première période temporelle cible sur la base des premières données d'exercice cibles à l'aide d'une largeur de fenêtre itérative comprend :
déterminer une largeur de fenêtre itérative dans la première période temporelle cible sur la base des premières données d'exercice cibles ;
déterminer, à l'aide de la largeur de fenêtre itérative, les pics compris dans les premières données d'exercice cibles, la recherche de pics étant effectuée pour trouver les maxima locaux des premières données d'exercice cibles dans la largeur de fenêtre itérative ; et
déterminer l'état de saut à la corde pendant la première période temporelle cible sur la base des pics compris dans les premières données d'exercice cibles ;
le fait de déterminer une largeur de fenêtre itérative dans la première période temporelle cible sur la base des premières données d'exercice cibles comprend :
effectuer une recherche de pics sur les premières données d'exercice cibles sur la base d'une largeur de fenêtre prédéfinie ou d'une largeur de fenêtre obtenue lors du calcul itératif précédent, afin d'obtenir une quantité prédéterminée de pics ;
obtenir une largeur de fenêtre de référence des premières données d'exercice cibles sur la base de la quantité prédéterminée de pics ;
effectuer de nouveau une recherche de pics sur les premières données d'exercice cibles sur la base de la largeur de fenêtre de référence afin d'obtenir une quantité de pics de référence ; et
déterminer la largeur de fenêtre itérative dans la première période temporelle cible sur la base de la quantité prédéterminée de pics et de la quantité de pics de référence.

2. Le procédé selon la revendication 1, dans lequel la détermination de la largeur de la fenêtre itérative durant la première période cible sur la base de la quantité de pics prédéfinie et de la quantité de pics de référence comprend :
l'obtention d'une fréquence de saut à la corde prédéfinie durant la première période cible sur la base de la quantité de pics prédéfinie ;
l'obtention d'une fréquence de saut à la corde de référence durant la première période cible sur la base de la quantité de pics de référence ; et
le calcul d'une valeur absolue de la différence entre la fréquence de saut à la corde prédéfinie et la fréquence de saut à la corde de référence, dans lequel
si la valeur absolue de la différence est supérieure ou égale à un seuil de référence, la largeur de la fenêtre itérative est une valeur moyenne entre la largeur de la fenêtre prédéfinie et celle de référence.

3. Le procédé selon l'une quelconque des revendications 1 ou 2, dans lequel la détermination de l'état de saut à la corde durant la première période cible sur la base des pics compris dans les premières données d'exercice cible comprend :
l'extraction d'une caractéristique du domaine fréquentiel durant la première période cible sur la base des premières données d'exercice cible ;
l'extraction d'une caractéristique du domaine temporel durant la première période cible sur la base des pics compris dans les premières données d'exercice cible ; et
la détermination de l'état de saut à la corde durant la première période cible sur la base de la caractéristique du domaine temporel et de celle du domaine fréquentiel.

4. Le procédé selon la revendication 3, dans lequel la caractéristique du domaine temporel comprend un intervalle de pics, et où l'extraction d'une caractéristique du domaine temporel durant la première période cible sur la base des pics compris dans les premières données d'exercice cible comprend :
le calcul d'un premier intervalle de pics entre deux pics adjacents parmi les pics compris dans les premières données d'exercice cible ;
la détermination d'un pic effectif dans les premières données d'exercice cible sur la base du premier intervalle de pics ; et
l'utilisation d'un second intervalle de pics entre deux pics effectifs adjacents comme caractéristique du domaine temporel durant la première période cible.

5. Le procédé selon la revendication 4, dans lequel la détermination d'un pic effectif dans les premières données d'exercice cible sur la base du premier intervalle de pics comprend :
si le premier intervalle de pics est supérieur ou égal à un premier seuil prédéfini, déterminer que le premier des deux pics adjacents est le pic effectif.

6. Le procédé selon la revendication 3, dans lequel la caractéristique du domaine temporel comprend une valeur pic-à-vallée, et où l'extraction d'une caractéristique du domaine temporel durant la première période cible sur la base des pics compris dans les premières données d'exercice cible comprend :
calculer les valeurs crête-à-vallée des pics compris dans les premières données d'exercice cibles, où la valeur crête-à-vallée de chaque pic correspond à la différence de hauteur entre la crête et la vallée la plus proche après la crête ;
calculer un rapport entre les valeurs crête-à-vallée de deux pics adjacents quelconques ;
déterminer un pic effectif dans les premières données d'exercice cibles sur la base du rapport entre les valeurs crête-à-vallée de deux pics adjacents quelconques ; et
utiliser la valeur crête-à-vallée du pic effectif comme caractéristique du domaine temporel dans la première période temporelle cible.

7. Procédé selon la revendication 6, où la détermination d'un pic effectif dans les premières données d'exercice cibles sur la base du rapport entre les valeurs crête-à-vallée de deux pics adjacents quelconques comprend :
si le rapport entre les valeurs crête-à-vallée de deux pics adjacents quelconques est supérieur ou égal à un deuxième seuil prédéfini, déterminer que le premier des deux pics adjacents est le pic effectif.

8. Procédé selon la revendication 3, où la caractéristique du domaine fréquentiel comprend une proportion d'énergie de fréquence dominante, et où l'extraction d'une caractéristique du domaine fréquentiel dans la première période temporelle cible sur la base des premières données d'exercice cibles comprend :
extraire la densité spectrale de puissance des premières données d'exercice cibles grâce à une transformation de Fourier ; et
déterminer la proportion d'énergie de fréquence dominante dans la première période temporelle cible à partir de la densité spectrale de puissance.

9. Procédé selon l'une quelconque des revendications 3 à 8, où la caractéristique du domaine temporel comprend l'intervalle des pics et la valeur crête-à-vallée, la caractéristique du domaine fréquentiel comprend la proportion d'énergie de fréquence dominante, et la détermination de l'état du saut à la corde dans la première période temporelle cible sur la base de la caractéristique du domaine temporel et de la caractéristique du domaine fréquentiel comprend :
saisir l'intervalle des pics, la valeur crête-à-vallée et la proportion d'énergie de fréquence dominante dans un modèle de décision ; et
déterminer l'état du saut à la corde dans la première période temporelle cible en utilisant le modèle de décision.

10. Procédé selon la revendication 9, après la détermination de l'état du saut à la corde dans la première période temporelle cible à l'aide du modèle de décision, comprenant en outre :
lorsque l'état du saut à la corde dans la première période temporelle cible est différent de l'état du saut à la corde dans une période temporelle précédente de la première période temporelle cible, saisir l'état du saut à la corde dans la première période temporelle cible et l'état du saut à la corde dans chaque période temporelle cible d'une prochaine période temporelle prédéfinie de la première période temporelle cible dans un modèle de transition d'état ; et
obtention de l'état de saut à la corde dans la première période temporelle cible en utilisant le modèle de transition d'état.

11. Le procédé selon la revendication 10, dans lequel l'obtention de l'état de saut à la corde dans la première période temporelle cible à l'aide du modèle de transition d'état comprend :
lorsque l'état de saut à la corde dans chaque période temporelle cible de la prochaine période temporelle prédéfinie dans le modèle de transition d'état est identique à l'état de saut à la corde dans la première période temporelle cible, obtenir l'état de saut à la corde dans la première période temporelle cible ; et
lorsqu'un état de saut à la corde dans une quelconque période temporelle de la prochaine période temporelle prédéfinie dans le modèle de transition d'état est différent de l'état de saut à la corde dans la première période temporelle cible, utiliser l'état de saut à la corde de la période temporelle cible précédente par rapport à la première période temporelle cible comme l'état de saut à la corde dans la première période temporelle cible.

12. Le procédé selon l'une quelconque des revendications 1 à 11, dans lequel l'état de saut à la corde comprend un ou plusieurs des éléments suivants : un état d'interruption de saut à la corde, un état de saut à vitesse constante, un état de saut accéléré, un état de saut ralenti et un état de saut à vitesse variable.

13. Un dispositif électronique (300), comprenant un ou plusieurs processeurs (110), une ou plusieurs mémoires (121), un ou plusieurs capteurs de mouvement (180), un collecteur de son (170) et un affichage (194), les mémoires, les capteurs de mouvement, le collecteur de son et l'affichage étant couplés aux processeurs ; les mémoires sont configurées pour stocker un code de programme informatique, le code comprenant des instructions informatiques ; et les processeurs exécutent les instructions informatiques, de sorte que le dispositif électronique mette en œuvre le procédé selon l'une quelconque des revendications 1 à 12.
